# EUROPEAN PATENT APPLICATION

(11) **EP 4 683 405 A1**
(43) Date of publication of application: **21.01.2026**
(21) Application number: 24777843.4
(22) Date of filing: 20.03.2024
(51) Int. Cl.: H04W 72/04, H04W 4/02, G06K 17/00, H04W 4/021, H04W 60/00

(54) **COMMUNICATION METHOD AND RELATED APPARATUS**

(30) Priority: 31.03.2023 CN 202310364461
(71) Applicant: Huawei Technologies Co., Ltd., Shenzhen, Guangdong 518129 (CN)
(72) Inventor: HAN, Zhilin, Shenzhen, Guangdong 518129 (CN); XU, Yishan, Shenzhen, Guangdong 518129 (CN)
(74) Representative: Gill Jennings & Every LLP
(86) International application number: PCT/CN2024/082814
(87) International publication number: WO 2024/199054

(57) **Abstract**

This application provides a communication method and a related apparatus. In the method, an access network device may determine multiple groups of terminal devices having a capability of exciting a passive internet of things tag, and send corresponding first information for each of the multiple groups of terminal devices, where the first information indicates a terminal device in the corresponding group of terminal devices to trigger corresponding carrier excitation. It can be learned that the access network device can effectively indicate the terminal device to trigger the corresponding carrier excitation, and efficiently allocate communication resources. In addition, because the access network device indicates different carriers for different groups of terminal devices, and use of multiple carriers can effectively reduce a possibility of a sending conflict between tags, access efficiency of a tag can be effectively improved when communication resources are limited, that is, a capacity of the tag can be effectively improved when communication resources are limited.

## Description

This application claims priority to Chinese Patent Application No. 202310364461.6, filed with the China National Intellectual Property Administration on March 31, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

A passive internet of things (Passive IoT, P-IoT) system is an internet of things system including passive network nodes. These passive network nodes are not equipped with or rely on power supply devices, can perform data sensing, data transmission, and distributed computing using environmental sources such as solar energy, radio frequency energy, wind energy, hydro energy, or tidal energy.

In an implementation, the P-IoT system may include a tag, a terminal device, and a network device. The tag is a passive network node in the P-IoT system, the terminal device is configured to provide carrier excitation for the tag, and the network device is configured to exchange information with the tag. Optionally, when the tag enters within an excitation range of the terminal device, the tag may reflect carriers sent by the terminal device to exchange information with the network device, thereby completing a corresponding tag operation (for example, an inventory operation, a read/write operation, or a disable operation). Consequently, how to indicate the terminal device to trigger corresponding carrier excitation is an urgent problem to be resolved.

### SUMMARY

Embodiments of this application provide a communication method and a related apparatus, to effectively indicate a terminal device to trigger corresponding carrier excitation.

According to a first aspect, an embodiment of this application provides a communication method. The method includes: An access network (Radio Access Network, RAN) device determines multiple groups of terminal devices having a capability of exciting a P-IoT tag, determines first information for each of the multiple groups of terminal devices, and sends the corresponding first information to each of the multiple groups of terminal devices, where the first information indicates a terminal device in the corresponding group of terminal devices to trigger corresponding carrier excitation, and the carrier excitation is used to excite a P-IoT tag.

Optionally, the communication method may be applied to the RAN device, or may be applied to a chip in the RAN device, or may be applied to a logic module or software that can implement all or some functions of the RAN device.

It can be learned that the RAN device in this embodiment of this application may determine the multiple groups of terminal devices having the capability of exciting a P-IoT tag, and indicate, by using the first information, the terminal device in the corresponding group of terminal devices to trigger the corresponding carrier excitation, so that the terminal device can be effectively indicated to trigger the corresponding carrier excitation. In addition, because the RAN device indicates different first information for different groups of terminal devices, and the different first information indicates terminal devices in the different groups of terminal devices to excite a P-IoT tag by using different carriers, the RAN device can efficiently allocate communication resources. In addition, because the RAN device indicates different carriers for different groups of terminal devices, and use of multiple carriers can effectively reduce a possibility of a sending conflict between tags (for example, when multiple tags simultaneously perform reporting in one time unit, use of a plurality of carriers can enable the RAN device to correctly demodulate and identify information about different tags), access efficiency of a tag can be effectively improved when communication resources are limited, that is, a capacity of the tag can be effectively improved when communication resources are limited.

In an optional implementation, that the RAN device determines the multiple groups of terminal devices having the capability of exciting a P-IoT tag includes: The RAN device receives a first request message from an access and mobility management function (Access and Mobility Management Function, AMF) network element, where the first request message is used to request the RAN device to trigger a tag to perform random access, and the first request message includes group information of the multiple groups of terminal devices having the capability of exciting a P-IoT tag. The group information includes one or more terminal device identifiers and/or corresponding group numbers. The terminal device identifier is used to identify a terminal device having the capability of exciting a P-IoT tag, and the group number indicates a group of terminal devices that corresponds to the terminal device. The terminal device identifier may include one or more of a permanent identifier (for example, a subscription permanent identifier SUPI; or a permanent equipment identifier PEI), a temporary identifier (for example, an SUPI; or a 5G-GUTI), an internal identifier, or an external identifier (for example, an internet protocol IP address) of the terminal. It can be learned that in this implementation, the first request message received by the RAN device includes the group information of the multiple groups of terminal devices, and the RAN device may directly determine the multiple groups of terminal devices based on the group information included in the first request message.

In an optional implementation, that the RAN device determines the multiple groups of terminal devices having the capability of exciting a P-IoT tag includes: The RAN device receives a first request message from an AMF network element, and groups terminal devices in a list of terminal devices based on air interface connection statuses, to obtain the multiple groups of terminal devices. The first request message is used to request the RAN device to trigger a tag to perform random access, the first request message includes the list of terminal devices having the capability of exciting a P-IoT tag, and the list of terminal devices includes one or more terminal device identifiers. Terminal devices in a same group among the multiple groups of terminal devices have a same air interface connection status. It can be learned that in this implementation, the first request message received by the RAN device includes the list of terminal devices, and the RAN device may group the terminal devices in the list of terminal devices based on the air interface connection status, to obtain the multiple groups of terminal devices.

In an optional implementation, before the RAN device receives the first request message from the AMF network element, the method further includes: A tag management function (Tag Management Function, TMF) network element receives a second request message from an application function (Application Function, AF) network element, where the second request message is used to request to perform an operation on a tag in a first area. The TMF network element determines a list of terminal devices or multiple groups of terminal devices in the first area that have the capability of exciting a P-IoT tag, and sends a third request message to the AMF network element, where the third request message is used to request to perform an operation on the tag in the first area, and the third request message includes the list of terminal devices or group information of the multiple groups of terminal devices in the first area that have the capability of exciting a P-IoT tag. When receiving the third request message, the AMF network element may send the first request message to the RAN device, where the first request message includes the list of terminal devices or the group information of the multiple groups of terminal devices.

Optionally, when the TMF network element determines the list of terminal devices in the first area that have the capability of exciting a P-IoT tag, the third request message includes the list of terminal devices, and the first request message also includes the list of terminal devices. Optionally, when the TMF network element determines the multiple groups of terminal devices in the first area that have the capability of exciting a P-IoT tag, the third request message includes the group information of the multiple groups of terminal devices, and the first request message also includes the group information of the multiple groups of terminal devices.

Optionally, the TMF network element in the communication method may alternatively be a chip in the TMF network element, or a logic module or software that can implement all or some TMF network elements, or an AMF network element that can implement all or some TMF network elements. For example, the TMF network element may be another AMF network element having a P-IoT interaction capability.

Optionally, the AMF network element in the communication method may alternatively be a chip in the AMF network element, or a logic module or software that can implement all or some AMF network elements.

It can be learned that in this implementation, the TMF network element may send the list of terminal devices or the group information of the multiple groups of terminal devices to the RAN device through the AMF network element. This helps the RAN device process the list of terminal devices or the group information of the multiple groups of terminal devices, to determine the multiple groups of terminal devices.

In an optional implementation, before the RAN device receives the first request message from the AMF network element, the method further includes: The RAN device receives second information of a terminal device accessing the RAN device, where the second information includes P-IoT capability information of the terminal device, and the P-IoT capability information indicates that the terminal device has the capability of exciting a P-IoT tag; and the RAN device selects an AMF network element having a P-IoT interaction capability, and sends third information to the AMF network element, where the third information includes the P-IoT capability information of the terminal device accessing the RAN device. It can be learned that in this implementation, when receiving the P-IoT capability information reported by the terminal device, the RAN device may send the P-IoT capability information of the terminal device to the AMF network element having the P-IoT interaction capability.

In an optional implementation, after the RAN device sends the corresponding first information to each of the multiple groups of terminal devices, the method further includes: The RAN device sends fourth information to each of the multiple groups of terminal devices, where the fourth information indicates the terminal device in the corresponding group of terminal devices to disable the corresponding carrier excitation. It can be learned that in this implementation, the RAN device may indicate, by using the fourth information, the terminal device in the group of terminal devices to disable the corresponding carrier excitation, so as to avoid that the terminal device continues to send, when a tag operation is completed, a carrier used to excite a P-IoT tag, thereby effectively saving resources.

According to a second aspect, an embodiment of this application provides another communication method. The method includes: A TMF network element receives a second request message from an AF network element, where the second request message is used to request to perform an operation on a tag in a first area; and the TMF network element determines multiple groups of terminal devices in the first area that have a capability of exciting a P-IoT tag, and sends a third request message to an AMF network element, where the third request message is used to request to perform an operation on the tag in the first area, the third request message includes group information of the multiple groups of terminal devices in the first area that have the capability of exciting a P-IoT tag, and the group information is used to determine corresponding carrier excitation.

Optionally, the method may be applied to the TMF network element, or may be applied to a chip in the TMF network element, or may be applied to a logic module or software that can implement all or some functions of the TMF network element.

It can be learned that in this embodiment of this application, the TMF network element may determine the multiple groups of terminal devices, and generate the group information of the multiple groups of terminal devices. When the TMF network element sends the group information of the multiple groups of terminal devices to a RAN device through the AMF network element, it helps the RAN device determine the multiple groups of terminal devices based on the group information, and determine corresponding first information for each of the multiple groups of terminal devices. Thus, when the RAN device sends the corresponding first information to each of the multiple groups of terminal devices, a terminal device can be effectively indicated to trigger corresponding carrier excitation.

In an optional implementation, that the TMF network element determines the multiple groups of terminal devices in the first area that have the capability of exciting a P-IoT tag includes: The TMF network element determines a list of terminal devices in the first area that have the capability of exciting a P-IoT tag; and groups the terminal devices in the list of terminal devices based on location information and/or service types, to obtain the multiple groups of terminal devices.

Optionally, a distance between terminal devices in a same group among the multiple groups of terminal devices is greater than or equal to a preset threshold, and/or a total excitation range of terminal devices in a same group among the multiple groups of terminal devices covers the first area.

Optionally, terminal devices in a same group among the multiple groups of terminal devices have a same service type.

In an optional implementation, that the TMF network element determines the list of terminal devices in the first area that have the capability of exciting a P-IoT tag includes: The TMF network element selects an AMF network element that has a P-IoT interaction capability and covers the first area, and sends a fourth request message to the AMF network element, where the fourth request message is used to request the list of terminal devices in the first area that have the capability of exciting a P-IoT tag; and the TMF network element receives fifth information from the AMF network element, where the fifth information includes the list of terminal devices in the first area that have the capability of exciting a P-IoT tag. It can be learned that the TMF network element may directly obtain, from the AMF network element that has the P-IoT interaction capability and covers the first area, the list of terminal devices in the first area that have the capability of exciting a P-IoT tag. Thus, when the TMF network element sends the list of terminal devices to the RAN device, it helps the RAN device identify a terminal device having the capability of exciting a P-IoT tag.

Optionally, the fourth request message is a subscription request message, and the subscription request message is used to subscribe to the list of terminal devices in the first area that have the capability of exciting a P-IoT tag. In this case, the step in which the TMF network element receives the fifth information from the AMF network element is performed when the AMF network element receives the subscription request message or the AMF network element has received the subscription request message and the subscribed list of terminal devices is updated.

In an optional implementation, that the TMF network element determines the list of terminal devices in the first area that have the capability of exciting a P-IoT tag includes: The TMF network element selects an AMF network element that has a P-IoT interaction capability and covers the first area, and sends a fifth request message to the AMF network element, where the fifth request message is used to request a list of terminal devices in the first area. The TMF network element receives sixth information from the AMF network element, where the sixth information includes the list of terminal devices in the first area; and sends a sixth request message to a unified data management (Unified Data Management, UDM) network element, where the sixth request message includes the list of terminal devices in the first area, and the sixth request message is used to request P-IoT capability information of the terminal device in the first area. The TMF network element receives seventh information from the UDM network element, and determines, based on the seventh information, the list of terminal devices in the first area that have the capability of exciting a P-IoT tag, where the seventh information includes the P-IoT capability information of the terminal device in the first area. It can be learned that in this implementation, the TMF network element obtains the list of terminal devices in the first area from the AMF network element, obtains P-IoT capability information of each terminal device in the list of terminal devices from the UDM network element, and determines, based on the P-IoT capability information, the list of terminal devices in the first area that have the capability of exciting a P-IoT tag. Thus, when the TMF network element sends the list of terminal devices to the RAN device, it helps the RAN device identify a terminal device having the capability of exciting a P-IoT tag.

According to a third aspect, an embodiment of this application provides another communication method. The method includes: A TMF network element receives a second request message from an AF network element, where the second request message is used to request to perform an operation on a tag in a first area; and the TMF network element determines a list of terminal devices in the first area that have a capability of exciting a P-IoT tag, and sends a third request message to an AMF network element, where the third request message is used to request to perform an operation on the tag in the first area, the third request message includes the list of terminal devices in the first area that have the capability of exciting a P-IoT tag, the list of terminal devices includes one or more terminal device identifiers, and a terminal device identified by the terminal device identifier is configured to excite a P-IoT tag.

Optionally, the method may be applied to the TMF network element, or may be applied to a chip in the TMF network element, or may be applied to a logic module or software that can implement all or some functions of the TMF network element.

It can be learned that in this embodiment of this application, the TMF network element may determine the list of terminal devices. When the TMF network element sends the list of terminal devices to a RAN device through the AMF network element, it helps the RAN device group the terminal devices in the list of terminal devices based on air interface connection statuses to obtain multiple groups of terminal devices, and determine corresponding first information for each of the multiple groups of terminal devices. Thus, when the RAN device sends the corresponding first information to each of the multiple groups of terminal devices, a terminal device can be effectively indicated to trigger corresponding carrier excitation.

In an optional implementation, that the TMF network element determines the list of terminal devices in the first area that have the capability of exciting a P-IoT tag includes: The TMF network element selects an AMF network element that has a P-IoT interaction capability and covers the first area, and sends a fourth request message to the AMF network element, where the fourth request message is used to request the list of terminal devices in the first area that have the capability of exciting a P-IoT tag; and the TMF network element receives fifth information from the AMF network element, where the fifth information includes the list of terminal devices in the first area that have the capability of exciting a P-IoT tag. It can be learned that the TMF network element may directly obtain, from the AMF network element that has the P-IoT interaction capability and covers the first area, the list of terminal devices in the first area that have the capability of exciting a P-IoT tag. Thus, when the TMF network element sends the list of terminal devices to the RAN device, it helps the RAN device identify a terminal device having the capability of exciting a P-IoT tag.

In an optional implementation, that the TMF network element determines the list of terminal devices in the first area that have the capability of exciting a P-IoT tag includes: The TMF network element selects an AMF network element that has a P-IoT interaction capability and covers the first area, and sends a fifth request message to the AMF network element, where the fifth request message is used to request a list of terminal devices in the first area. The TMF network element receives sixth information from the AMF network element, where the sixth information includes the list of terminal devices in the first area; and sends a sixth request message to a UDM network element, where the sixth request message includes the list of terminal devices in the first area, and the sixth request message is used to request P-IoT capability information of the terminal device in the first area. The TMF network element receives seventh information from the UDM network element, and determines, based on the seventh information, the list of terminal devices in the first area that have the capability of exciting a P-IoT tag, where the seventh information includes the P-IoT capability information of the terminal device in the first area. It can be learned that in this implementation, the TMF network element may obtain the list of terminal devices in the first area from the AMF network element, obtain P-IoT capability information of each terminal device in the list of terminal devices from the UDM network element, and determine, based on the P-IoT capability information, the list of terminal devices in the first area that have the capability of exciting a P-IoT tag. Thus, when the TMF network element sends the list of terminal devices to the RAN device, it helps the RAN device identify a terminal device having the capability of exciting a P-IoT tag.

According to a fourth aspect, an embodiment of this application provides another communication method. The method includes: A terminal device receives first information from an accessed RAN device, and triggers corresponding carrier excitation based on the first information, where the first information indicates a terminal device in a corresponding group of terminal devices to trigger corresponding carrier excitation, and the carrier excitation is used to excite a P-IoT tag.

Optionally, the method may be applied to the terminal device, or may be applied to a chip in the terminal device, or may be applied to a logic module or software of the terminal device that can implement all or some functions.

It can be learned that in this embodiment of this application, when the terminal device receives the first information corresponding to the group of terminal devices, the terminal device may trigger the corresponding carrier excitation by using a carrier corresponding to the group of terminal devices. A same carrier is used by terminal devices in a same group to excite a P-IoT tag, so that resources can be effectively saved, and resource utilization can be improved.

In an optional implementation, the method further includes: The terminal device sends second information to the accessed RAN device, where the second information includes P-IoT capability information of the terminal device, and the P-IoT capability information indicates that the terminal device has a capability of exciting a P-IoT tag.

Optionally, the second information may be AN information. For example, the terminal device sends the second information to the accessed RAN device by using an AN message, where the AN message includes a NAS registration request message and the AN information, the AN information includes the P-IoT capability information of the terminal device, and the NAS registration request message is used to request to access the RAN device.

It can be learned that in this implementation, the terminal device may report the P-IoT capability information of the terminal device to the accessed RAN device through a registration procedure.

In an optional implementation, after the terminal device triggers the corresponding carrier excitation based on the first information, the method further includes: The terminal device receives fourth information from the accessed RAN device, and disables the corresponding carrier excitation based on the second information, where the fourth information indicates the terminal device in the corresponding group of terminal devices to disable the corresponding carrier excitation. It can be learned that when receiving the fourth information, the terminal device can disable the corresponding carrier excitation in a timely manner, so as to avoid that the terminal device continues to send, when a tag operation is completed, a carrier used to excite a P-IoT tag, thereby effectively saving resources.

According to a fifth aspect, this application further provides a communication apparatus. The communication apparatus has a function of implementing some or all of the implementations of the first aspect, or has a function of implementing some or all of the functional implementations of the second aspect, or has a function of implementing some or all of the functional implementations of the third aspect. The function may be implemented by using hardware, or may be implemented by using hardware executing corresponding software. The hardware or the software includes one or more units or modules corresponding to the function.

In a possible design, a structure of the communication apparatus may include a processing unit and a communication unit. The processing unit is configured to support the communication apparatus in performing a corresponding function in the foregoing method. The processing unit may be configured to control the communication unit to perform data/signaling receiving and sending. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the processing unit is configured to determine multiple groups of terminal devices having a capability of exciting a P-IoT tag; the processing unit is further configured to determine first information for each of the multiple groups of terminal devices, where the first information indicates a terminal device in the corresponding group of terminal devices to trigger corresponding carrier excitation, and the carrier excitation is used to excite a P-IoT tag; and the communication unit is configured to send the corresponding first information to each of the multiple groups of terminal devices.

In addition, for another optional implementation of the communication apparatus in this aspect, refer to the related content of the first aspect. Details are not described herein again.

In another implementation, the communication unit is configured to receive a second request message from an AF network element, where the second request message is used to request to perform an operation on a tag in a first area; the processing unit is configured to determine multiple groups of terminal devices in the first area that have a capability of exciting a P-IoT tag; and the communication unit is further configured to send a third request message to an AMF network element, where the third request message is used to request to perform an operation on the tag in the first area, the third request message includes group information of the multiple groups of terminal devices in the first area that have the capability of exciting a P-IoT tag, and the group information is used to determine corresponding carrier excitation.

In addition, for another optional implementation of the communication apparatus in this aspect, refer to the related content of the second aspect. Details are not described herein again.

In another implementation, the communication unit is configured to receive a second request message from an AF network element, where the second request message is used to request to perform an operation on a tag in a first area; the processing unit is configured to determine a list of terminal devices in the first area that have a capability of exciting a P-IoT tag; and the communication unit is further configured to send a third request message to an AMF network element, where the third request message is used to request to perform an operation on the tag in the first area, the third request message includes the list of terminal devices in the first area that have the capability of exciting a P-IoT tag, the list of terminal devices includes one or more terminal device identifiers, and a terminal device identified by the terminal device identifier is configured to excite a P-IoT tag.

In addition, for another optional implementation of the communication apparatus in this aspect, refer to the related content of the third aspect. Details are not described herein again.

For example, the communication unit may be a transceiver or a communication interface, the storage unit may be a memory, and the processing unit may be a processor. The processor may be configured to perform the method according to the first aspect, the second aspect, or the third aspect by using a logic circuit or by running a computer program. The transceiver may be configured to receive and send signals. The memory may be configured to store a computer program.

In an implementation, the processor is configured to determine multiple groups of terminal devices having a capability of exciting a P-IoT tag; the processor is further configured to determine first information for each of the multiple groups of terminal devices, where the first information indicates a terminal device in the corresponding group of terminal devices to trigger corresponding carrier excitation, and the carrier excitation is used to excite a P-IoT tag; and the transceiver is configured to send the corresponding first information to each of the multiple groups of terminal devices.

In addition, for another optional implementation of the communication apparatus in this aspect, refer to the related content of the first aspect. Details are not described herein again.

In another implementation, the transceiver is configured to receive a second request message from an AF network element, where the second request message is used to request to perform an operation on a tag in a first area; the processor is configured to determine multiple groups of terminal devices in the first area that have a capability of exciting a P-IoT tag; and the transceiver is further configured to send a third request message to an AMF network element, where the third request message is used to request to perform an operation on the tag in the first area, the third request message includes group information of the multiple groups of terminal devices in the first area that have the capability of exciting a P-IoT tag, and the group information is used to determine corresponding carrier excitation.

In addition, for another optional implementation of the communication apparatus in this aspect, refer to the related content of the second aspect. Details are not described herein again.

In another implementation, the transceiver is configured to receive a second request message from an AF network element, where the second request message is used to request to perform an operation on a tag in a first area; the processor is configured to determine a list of terminal devices in the first area that have a capability of exciting a P-IoT tag; and the transceiver is further configured to send a third request message to an AMF network element, where the third request message is used to request to perform an operation on the tag in the first area, the third request message includes the list of terminal devices in the first area that have the capability of exciting a P-IoT tag, the list of terminal devices includes one or more terminal device identifiers, and a terminal device identified by the terminal device identifier is configured to excite a P-IoT tag.

In addition, for another optional implementation of the communication apparatus in this aspect, refer to the related content of the third aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, increasingly more components may be integrated on a same chip. For example, the digital baseband processor may be integrated on a same chip as multiple application processors (for example, but not limited to a graphics processing unit and a multimedia processor). The chip may be referred to as a system on a chip (system on a chip, SoC). Whether components are independently disposed on different chips or are integrated and disposed on one or more chips usually depends on requirements of a product design. Embodiments of this application impose no limitation on implementation forms of the foregoing components.

According to a sixth aspect, this application further provides another communication apparatus. The communication apparatus has a function of implementing some or all of the implementations in the fourth aspect. The function may be implemented by using hardware, or may be implemented by using hardware executing corresponding software. The hardware or the software includes one or more units or modules corresponding to the function.

In a possible design, a structure of the communication apparatus may include a processing unit and a communication unit. The processing unit is configured to support the communication apparatus in performing a corresponding function in the foregoing method. The processing unit may be configured to control the communication unit to perform data/signaling receiving and sending. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication unit is configured to receive first information from an accessed RAN device, where the first information indicates a terminal device in a corresponding group of terminal devices to trigger corresponding carrier excitation, and the carrier excitation is used to excite a P-IoT tag; and the processing unit is configured to trigger the corresponding carrier excitation based on the first information.

In addition, for another optional implementation of the communication apparatus in this aspect, refer to the related content of the fourth aspect. Details are not described herein again.

For example, the communication unit may be a transceiver or a communication interface, the storage unit may be a memory, and the processing unit may be a processor. The processor may be configured to perform the method according to the fourth aspect by using a logic circuit or by running a computer program. The transceiver may be configured to receive and send signals. The memory may be configured to store a computer program.

In an implementation, the transceiver is configured to receive first information from an accessed RAN device, where the first information indicates a terminal device in a corresponding group of terminal devices to trigger corresponding carrier excitation, and the carrier excitation is used to excite a P-IoT tag; and the processor is configured to trigger the corresponding carrier excitation based on the first information.

In addition, for another optional implementation of the communication apparatus in this aspect, refer to the related content of the fourth aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver may be configured to perform, for example, but not limited to, radio frequency receiving and sending. The foregoing components may be separately disposed on chips that are independent of each other, or at least some or all of the components may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, increasingly more components may be integrated on a same chip. For example, the digital baseband processor may be integrated on a same chip as multiple application processors (for example, but not limited to a graphics processing unit and a multimedia processor). The chip may be referred to as a system on a chip (system on a chip, SoC). Whether components are independently disposed on different chips or are integrated and disposed on one or more chips usually depends on requirements of a product design. Embodiments of this application impose no limitation on implementation forms of the foregoing components.

According to a seventh aspect, this application further provides a processor, configured to perform the foregoing methods. In processes of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to a transceiver, so that the transceiver transmits the signal. After the foregoing signal is output by the processor, other processing may further need to be performed before the signal arrives at the transceiver. Similarly, when the processor receives the input signal, the transceiver receives the signal, and inputs the signal into the processor. Further, after the transceiver receives the foregoing signal, other processing may further need to be performed on the signal, and then the signal is input to the processor.

Operations such as sending and receiving related to the processor may be more generally understood as operations such as input, receiving, and output of the processor, instead of operations such as sending and receiving directly performed by a radio frequency circuit and an antenna, unless otherwise specified, or provided that the operations do not contradict actual functions or internal logic of the operations in related descriptions.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to an eighth aspect, this application provides a computer-readable storage medium, configured to store instructions. When the instructions are run by a computer, the method according to any one of the first aspect, the second aspect, the third aspect, or the fourth aspect is performed.

According to a ninth aspect, this application further provides a computer program product including instructions. When the computer program product runs on a computer, the method according to any one of the first aspect, the second aspect, the third aspect, or the fourth aspect is performed.

According to a tenth aspect, this application provides a chip system. The chip system includes a processor and an interface. The interface is configured to obtain a program or instructions. The processor is configured to invoke the program or the instructions to implement the function in the first aspect, or is configured to invoke the program or the instructions to implement the function in the second aspect, or is configured to invoke the program or the instructions to implement the function in the third aspect, or is configured to invoke the program or the instructions to implement the function in the fourth aspect. In a possible design, the chip system further includes a memory. The memory is configured to store program instructions and data that are necessary for a terminal. The chip system may include a chip, or may include a chip and another discrete component.

### BRIEF DESCRIPTION OF DRAWINGS

To describe technical solutions in embodiments of this application more clearly, the following describes the accompanying drawings used in embodiments of this application.
FIG. 1 is a diagram of an architecture of a communication system according to an embodiment of this application;
FIG. 2 is a schematic flowchart of random access according to an embodiment of this application;
FIG. 3A to FIG. 3C are a schematic flowchart of a communication method according to an embodiment of this application;
FIG. 4 is a diagram of grouping according to an embodiment of this application;
FIG. 5A to FIG. 5D are a schematic flowchart of another communication method according to an embodiment of this application;
FIG. 6A to FIG. 6D are a schematic flowchart of another communication method according to an embodiment of this application;
FIG. 7A to FIG. 7D are a schematic flowchart of another communication method according to an embodiment of this application;
FIG. 8A to FIG. 8D are a schematic flowchart of another communication method according to an embodiment of this application;
FIG. 9A to FIG. 9C are a schematic flowchart of another communication method according to an embodiment of this application;
FIG. 10 is a diagram of a structure of a communication apparatus according to an embodiment of this application; and
FIG. 11 is a diagram of a structure of another communication apparatus according to an embodiment of this application.

### DESCRIPTION OF EMBODIMENTS

The following clearly and completely describes the technical solutions in embodiments of this application with reference to the accompanying drawings in embodiments of this application.

To better understand a communication method disclosed in embodiments of this application, a communication system to which embodiments of this application are applicable is described.

Embodiments of this application may be applied to a long term evolution (long term evolution, LTE) system and a 5th generation (5th generation, 5G) communication system like a new radio (new radio, NR) system. In addition, with continuous development of communication technologies, the technical solutions in embodiments of this application may be further applied to subsequently evolved communication systems, for example, a 6th generation (6th Generation, 6G) mobile communication technology system and a 7th generation (7th Generation, 7G) mobile communication technology system.

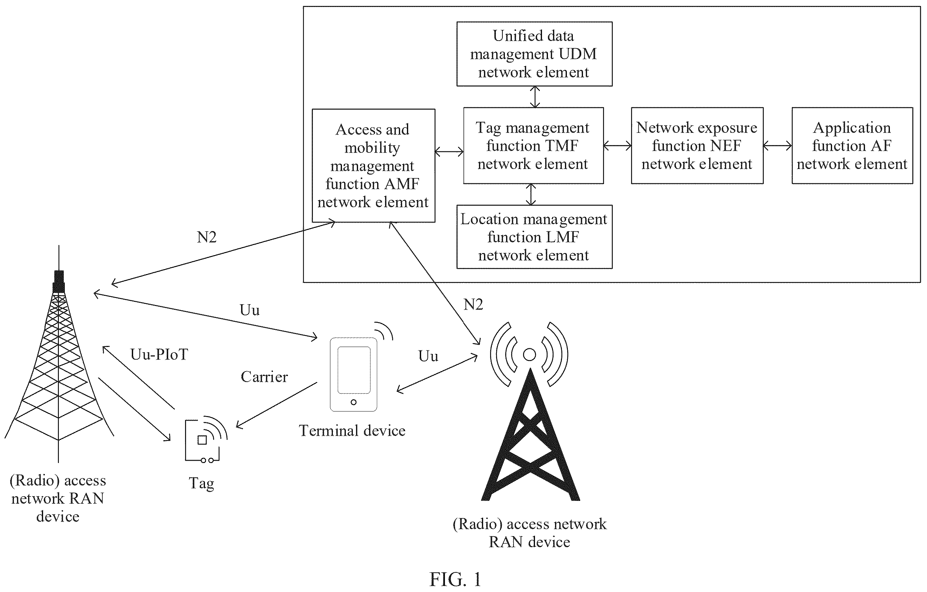

Refer to FIG. 1. FIG. 1 is a diagram of a network architecture according to an embodiment of this application. The network architecture is a network architecture of a P-IoT system. For example, the P-IoT system may include but is not limited to a system using a radio frequency identification (Radio Frequency Identification, RFID) technology, a passive internet of things technology, a semi-active internet of things technology, or the like.

A method according to embodiments of this application may be applied to the communication system shown in FIG. 1. The network architecture includes a tag, a terminal device, and a network device. The network device may include a (radio) access network (radio access network, RAN) device, an access and mobility management function (Access and mobility Management Function, AMF) network element, a tag management function (Tag Management Function, TMF) network element, a network exposure function (Network Exposure Function, NEF) network element, an application function (Application Function, AF) network element, a location management function (Location Management Function, LMF) network element, and a unified data management (Unified Data Management, UDM) network element.

The AMF network element communicates with the RAN device via an N2 interface, the RAN device communicates with the terminal device via a Uu interface, the terminal device provides carrier excitation for the tag, and the tag reflects the carrier to communicate with the RAN device via a Uu-P-IoT interface. In addition, the AF network element, the NEF network element, the LMF network element, the UDM network element, and the AMF network element may implement communication via a service-based interface provided externally. For example, a service-based interface provided externally by the AF network element is an Naf interface, a service-based interface provided externally by the NEF network element is an Nnef interface, a service-based interface provided externally by the LMF network element is an Nlmf interface, a service-based interface provided externally by the UDM network element is an Nudm interface, and a service-based interface provided externally by the AMF network element is an Namf interface.

In embodiments of this application, the tag is a passive network node in the P-IoT system, and may reflect carrier excitation sent by the terminal device and communicate with the RAN device by using energy obtained from an induced current. It should be noted that, in another embodiment, the tag may alternatively store some electric energy in a manner such as solar energy, and communicate with the RAN device by using the stored energy. Details are not described in this application.

In embodiments of this application, the terminal device is a device having wireless sending and receiving functions. The terminal device may also be referred to as user equipment (user equipment, UE), a terminal, an access terminal device, a vehicle-mounted terminal, an industrial control terminal, a subscriber unit, a subscriber station, a mobile station (mobile station, MS), a remote station, a remote terminal device, a mobile terminal (mobile terminal, MT), a mobile device, a wireless communication device, a user terminal, a user agent, a user apparatus, or the like. The terminal device may be deployed on land, and include an indoor or outdoor terminal device, a handheld terminal device, a wearable terminal device, or a vehicle-mounted terminal device; or may be deployed on a water surface (for example, on a ship); or may be deployed in the air (for example, on an aircraft or a balloon). The terminal device may be a mobile phone (mobile phone), a tablet computer (Pad), a computer with wireless sending and receiving functions, a virtual reality (VR) terminal device, an augmented reality (AR) terminal device, a wireless terminal in industrial control (industrial control), a vehicle-mounted terminal device, a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. This is not limited in this application.

In embodiments of this application, the RAN device is mainly responsible for access of a terminal device to a 3rd generation partnership project (3rd Generation Partnership Project, 3GPP) network through wireless communication. The RAN device includes but is not limited to an evolved NodeB (evolved NodeB, eNB), a radio network controller (radio network controller, RNC), a NodeB (NodeB, NB), a network device controller (base station controller, BSC), a network device transceiver station (base transceiver station, BTS), a home network device (for example, a home evolved NodeB, or a home NodeB, HNB), a baseband unit (baseband unit, BBU), or an access point (access point, AP), a wireless relay node, a wireless backhaul node, or a transmission point (transmission and reception point, TRP, or transmission point, TP) in a wireless fidelity (wireless fidelity, Wi-Fi) system; or may be a device used in a 4G, 5G, or even 6G system, for example, an evolved NodeB (NodeB or eNB or e-NodeB, evolved NodeB) in LTE, a next-generation LTE base station (next-generation eNodeB, ng-eNB), a next-generation base station (next-generation NodeB, gNodeB or gNB), a transceiver point, or a transmission point (TRP or TP); or may be a network node that forms a gNB or a transmission point, for example, a baseband unit (BBU), a distributed unit (distributed unit, DU), a pico network device (Picocell), a femto network device (Femtocell), or a roadside unit (roadside unit, RSU) in an intelligent driving scenario. The base station may be a macro base station, a micro base station, a pico base station, a small cell, a relay station, a balloon station, or the like.

In embodiments of this application, the AMF network element is configured to manage a signaling processing part, for example, functions such as access control, mobility management, attachment and detachment, and gateway selection. When serving a session of a terminal device, the AMF network element provides control plane storage resources for the session, and stores a session identifier, a session management function (Session Management Function, SMF) network element identifier associated with the session identifier, and the like.

In embodiments of this application, the TMF network element is mainly responsible for a tag management service of the P-IoT system.

In embodiments of this application, the NEF network element may be configured to provide capability exposure of a 5G core network, and allow an external network element to interact with the 5G core network through the network element. Specifically, the NEF network element is configured to manage secure interaction between a 3GPP network and a third-party application. The NEF can securely expose a network capability and an event to a third party, to enhance or improve application service quality. The 3GPP network can also securely obtain related data from the third party, to enhance intelligent decision-making of the network. In addition, the network element supports restoring structured data from a unified data repository or storing structured data in the unified data repository.

In embodiments of this application, the AF network element is configured to support interaction with a 3GPP core network to provide a service, for example, affect data routing decision-making, provide a policy control function, or provide some third-party services for a network side. In another embodiment, the AF network element in this application may alternatively be a server, an application server (application server, AS), a passive internet of things application function (P-IoT AF) network element, or the like.

In embodiments of this application, the LMF network element is configured to provide a location information management service.

In embodiments of this application, the UDM network element is configured to store structured data, and stored content includes subscription data, policy data, externally exposed structured data, and application-related data.

It should be noted that in actual deployment, network elements in a core network may be integrated. For example, the AMF network element may be integrated with the TMF network element. When two network elements are integrated, interaction between the two network elements provided in embodiments of this application becomes an internal operation of the integrated network element or may be omitted.

For ease of understanding embodiments disclosed in this application, the following two points are described.
(1) In embodiments disclosed in this application, an NR network scenario in a wireless communication network is used as an example to describe a scenario. It should be noted that the solutions in embodiments disclosed in this application may be further applied to another wireless communication network, and a corresponding name may also be replaced with a name of a corresponding function in the another wireless communication network.
(2) Aspects, embodiments, or features of this application are presented in embodiments disclosed in this application by describing a system that includes multiple devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

Then, related concepts in embodiments of this application are briefly described.

### 1. Tag operation

The tag operation is an operation performed on a tag. The tag operation includes but is not limited to one or more of an inventory operation (which may also be referred to as a counting operation), a read operation, a positioning operation, a write operation, or a disable operation. The inventory operation refers to inventorying a status of an existing tag, which may also be understood as obtaining an identifier of the tag. Each tag has a corresponding identifier. The identifier of the tag may be allocated by an enterprise (that is, written into the tag when the enterprise prints the tag), or may be allocated by an operator. In a possible implementation, the identifier of the tag may be a globally unique code "electronic product code" (Electronic Product Code, EPC), or may be a temporary identifier or a non-globally-unique identifier. In an inventory procedure, a network device may generate an inventory instruction, and inventory the tag according to the inventory instruction. The read operation refers to reading data stored in a tag. For example, the data may be sensor data, and the read operation is used to read the sensor data stored in the tag. The tag may have a storage function, and a storage area of the tag is used to store data. If a network device intends to perform a read operation on the tag, the network device generates a read instruction, and performs the read operation on the tag according to the read instruction, to read data from the storage area of the tag. The positioning operation is an operation of obtaining location information of a tag. A network device may generate a positioning instruction, and perform a positioning operation on the tag according to the positioning instruction, to obtain the location information of the tag. The write operation refers to writing data into a tag. A network device may generate a write instruction, and perform a write operation on the tag according to the write instruction, to write data into a storage area of the tag. The disable operation can invalidate or disable a tag. A network device may send a disable instruction, where the disable instruction may include a tag identifier (that is, an identifier of a tag that is expected to be disabled or invalidated). The network device performs an invalidation operation on the tag according to the instruction. After the operation is completed, the tag is invalidated or disabled, and an inventory operation or another operation cannot be performed on the tag.

### 2. Random access procedure

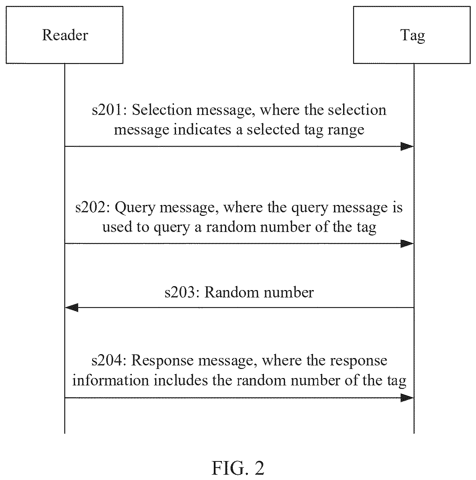

The random access procedure is a procedure in which a tag randomly accesses a reader before a tag operation is performed. Refer to FIG. 2. FIG. 2 is a diagram of a random access procedure. As shown in FIG. 2, the random access procedure includes but is not limited to steps s201 to s204.

s201: A reader broadcasts a selection message, where the selection message indicates a selected tag range.

Optionally, the selection message may indicate the tag range by using one or more of a tag identifier (such as an EPC), a network identifier (such as a PLMN ID), or a user identifier (such as an AF identifier).

s202: The reader broadcasts a query message, where the query message is used to query a random number of a tag.

s203: The tag sends the corresponding random number to the reader in a contention manner. Correspondingly, the reader receives the random number from the tag.

In an optional implementation, after receiving the query message, the tag determines whether the tag belongs to the tag range indicated by the selection message; and if the tag belongs to the tag range, the tag feeds back the corresponding random number to the reader in the contention manner; or if the tag does not belong to the tag range, the tag does not perform step s203 and step s204.

It should be noted that a length of the random number is not limited in this application. For example, the random number may be 16 bits.

s204: The reader sends a response message, where the response information includes the random number of the tag.

It can be learned that the tag may access the reader by using step s201 to step s204. Optionally, the reader may be a terminal device or a RAN device. In embodiments of this application, the RAN device is used as an example for description. To be specific, before a tag operation is performed on the tag, the tag may access the RAN device through the random access procedure in FIG. 2.

### 3. P-IoT capability information of a terminal device

The P-IoT capability information of the terminal device indicates that the terminal device has a capability of exciting a P-IoT tag. The terminal device having the capability of exciting a P-IoT tag may share a carrier resource with a common terminal device, and the carrier resource used to excite the P-IoT tag cannot be used to transmit another cellular service. In consideration of power consumption, the common terminal device cannot be used to excite a P-IoT tag. Therefore, the terminal device having the capability of exciting a P-IoT tag needs to be determined based on the P-IoT capability information of the terminal device. It should be noted that, in another implementation, the P-IoT capability information of the terminal device may have two types, and the two types respectively indicate that the terminal device has or does not have the capability of exciting a P-IoT tag.

Embodiments of this application provide a communication method, so that terminal devices having a capability of exciting a P-IoT tag can be grouped to obtain multiple groups of terminal devices, and corresponding first information is sent for each of the multiple groups of terminal devices. The first information indicates a terminal device in the corresponding group of terminal devices to trigger corresponding carrier excitation, and the carrier excitation is used to excite a P-IoT tag. A RAN device can effectively indicate the terminal device to trigger the corresponding carrier excitation, and efficiently allocate communication resources. In addition, because the RAN device indicates different carriers for different groups of terminal devices, and use of multiple carriers can effectively reduce a possibility of a sending conflict between tags, access efficiency of a tag can be effectively improved when communication resources are limited, that is, a capacity of the tag can be effectively improved when communication resources are limited.

The following describes the communication method with reference to the accompanying drawings.

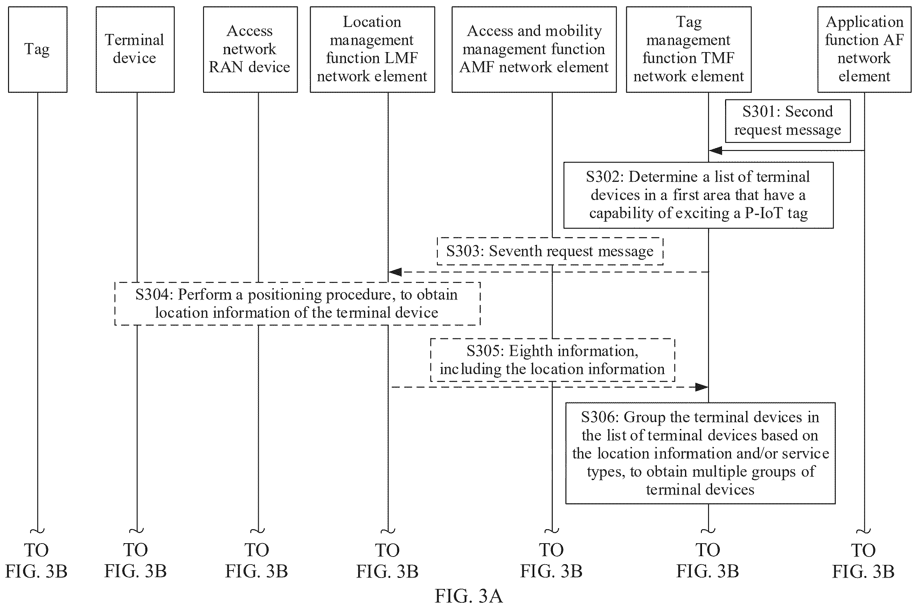

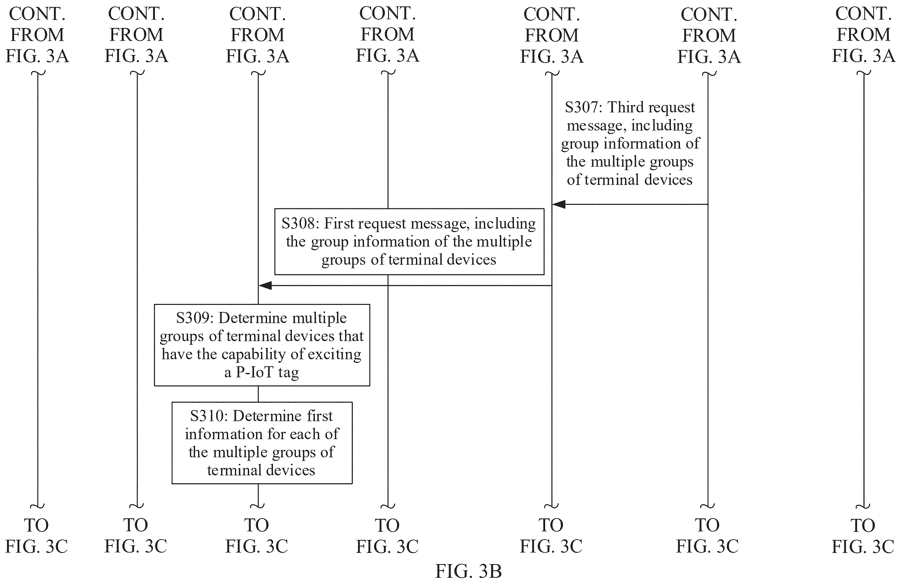

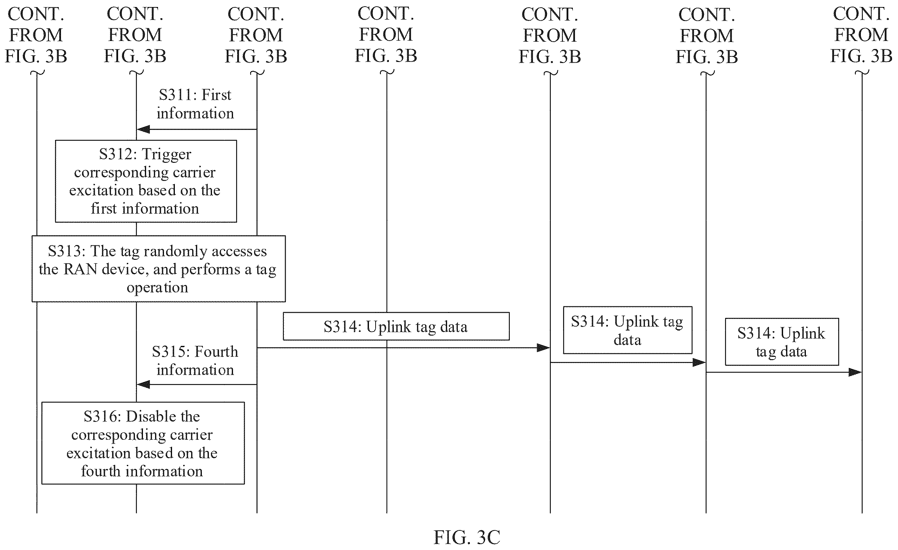

Refer to FIG. 3A to FIG. 3C. FIG. 3A to FIG. 3C are a schematic flowchart of a communication method according to an embodiment of this application. A TMF network element in the communication method may determine multiple groups of terminal devices in a first area that have a capability of exciting a P-IoT tag. When the TMF network element sends group information of the multiple groups of terminal devices to a RAN device through an AMF network element, it helps the RAN device determine corresponding carrier excitation based on the group information, to efficiently allocate communication resources. The following provides descriptions from a perspective of interaction between an AF network element, the TMF network element, the AMF network element, the RAN device, a terminal device, and a tag. As shown in FIG. 3A to FIG. 3C, the communication method includes but is not limited to the following steps.

S301: The AF network element sends a second request message to the TMF network element, and correspondingly, the TMF network element receives the second request message from the AF network element, where the second request message is used to request to perform an operation on a tag in a first area.

The second request message includes an AF identifier. The AF identifier may be an external identifier of an enterprise (for example, an IP address or a port number of the enterprise) or an identifier of the AF network element.

The second request message may include location information, for example, one or more pieces of location information in base station information, cell information, coordinate information, or longitude and latitude information. The location information may indicate the first area.

Optionally, the second request message may include a service type. For example, the service type in embodiments of this application may include an inventory service, a read service (for example, a sensing service), a positioning service, a write service, or a disable service. It should be noted that the service types herein correspond to different tag operations (for example, the inventory service corresponds to an inventory operation). For related descriptions of the inventory service, the read service, the positioning service, the write service, or the disable service, refer to the foregoing corresponding tag operations. Details are not described again. For another example, the service type in embodiments of this application may alternatively include an onpremise data service or an off-premise data service. For another example, the service type in embodiments of this application may alternatively include a latency-sensitive service or a latency-insensitive service. This is not limited in this application.

It should be noted that the operation requested to be performed on the tag in the first area by using the second request message includes but is not limited to one or more of an inventory operation, a read operation, a positioning operation, a write operation, or a disable operation.

In an optional implementation, that the AF network element sends the second request message to the TMF network element includes: The AF network element sends the second request message to the TMF network element through a NEF network element, and correspondingly, the TMF network element receives the second request message from the AF network element through the NEF network element. It can be learned that the TMF network element may perform secure interaction with the AF network element through the NEF network element, to effectively enhance or improve quality of an application service.

S302: The TMF network element determines a list of terminal devices in the first area that have a capability of exciting a P-IoT tag.

The list of terminal devices includes one or more terminal device identifiers. The terminal device identifier is used to identify a terminal device in the first area that has the capability of exciting a P-IoT tag. The terminal device identifier may include one or more of a permanent identifier (for example, an SUPI or a PEI), a temporary identifier (for example, an SUPI or a 5G-GUTI), an internal identifier, or an external identifier (for example, an IP address) of the terminal device. The permanent identifier of the terminal device is used to permanently identify the terminal device, and the permanent identifier of the terminal device does not change. The temporary identifier of the terminal device is used to identify the terminal device temporarily or within a period of time. The temporary identifier of the terminal device may change, and the temporary identifier of the terminal device may be temporarily generated for the terminal device. The internal identifier of the terminal device may be used to identify the terminal device in a 3GPP network. The external identifier of the terminal device may be used to identify the terminal device in a network other than the 3GPP network.

S303: The TMF network element sends a seventh request message to an LMF network element, and correspondingly, the LMF network element receives the seventh request message from the TMF network element, where the seventh request message includes the list of terminal devices and an LCS association identifier corresponding to each terminal device in the list of terminal devices.

The LCS association identifier corresponding to each terminal device may be obtained by the TMF network element from the AMF network element.

S304: The LMF network element performs a positioning procedure, to obtain location information of the terminal device.

Specifically, the LMF network element may perform the positioning procedure on each terminal device in the list of terminals based on the LCS association identifier, to obtain the location information.

S305: The LMF network element sends eighth information to the TMF network element, and correspondingly, the TMF network element receives the eighth information from the LMF network element, where the eighth information includes the location information of each terminal device in the list of terminal devices.

S306: The TMF network element groups the terminal devices in the list of terminal devices based on the location information and/or the service type, to obtain multiple groups of terminal devices.

Terminal devices in a same group among the multiple groups of terminal devices have a same service type. For example, the service type includes an inventory service, a read service, a write service, or a disable service. The multiple groups of terminal devices may include a group of terminal devices of the inventory service, a group of terminal devices of the read service, a group of terminal devices of the write service, or a group of terminal devices of the disable service. When different carriers are indicated for groups of terminal devices of different service types, a group of terminal devices of another service type can be effectively prevented from preempting a carrier resource of a group of terminal devices of a current service type. The current service type is the service type included in the second request message. For example, when the service type included in the second request message is an inventory service, a group of terminal devices of another service type can be effectively prevented from preempting a carrier resource of a group of terminal devices of the inventory service, thereby effectively improving execution efficiency of the inventory service and quickly completing inventory.

For another example, the service type includes an in-campus data service and a cross-campus data service. The multiple groups of terminal devices include a group of terminal devices of the in-campus data service and a group of terminal devices of the cross-campus data service. When different carriers are indicated for groups of terminal devices of different service types, a group of terminal devices of another service type can be effectively prevented from preempting a carrier resource of a group of terminal devices of a current service type. The current service type is the service type included in the second request message. For example, when the service type included in the second request message is a cross-campus data service, a group of terminal devices of another service type can be effectively prevented from preempting a carrier resource of a group of terminal devices of the cross-campus data service, thereby effectively improving execution efficiency of the cross-campus data service.

For another example, the service type includes a latency-sensitive service and a latency-insensitive service. The multiple groups of terminal devices may include a group of terminal devices of the latency-sensitive service and a group of terminal devices of the latency-insensitive service. When the group of terminal devices of the latency-sensitive service and the group of terminal devices of the latency-insensitive service respectively correspond to different carriers, and a quantity of groups of terminal devices of the latency-sensitive service is greater than a quantity of groups of terminal devices of the latency-insensitive service, a quantity of carriers of the latency-sensitive service is greater than a quantity of carriers of the latency-insensitive service. Therefore, a tag configured to execute the latency-sensitive service may use more carriers for communication, thereby effectively reducing a latency caused by a random access conflict, and ensuring a quality requirement of the latency-sensitive service.

Adjacent terminal devices whose distance is less than a preset threshold are in different groups (in other words, a distance between terminal devices in a same group among the multiple groups of terminal devices is greater than or equal to the preset threshold), and/or a total excitation range of terminal devices in a same group among the multiple groups of terminal devices covers the first area. It should be noted that the total excitation range of the terminal devices in the same group refers to a union set of excitation ranges of the terminal devices in the same group. For example, the excitation range of the terminal device refers to a circular area whose center is the terminal device and whose radius is an excitation distance. It should be noted that the preset threshold may be preconfigured or obtained from a request message from an enterprise (for example, obtained from the second request message).

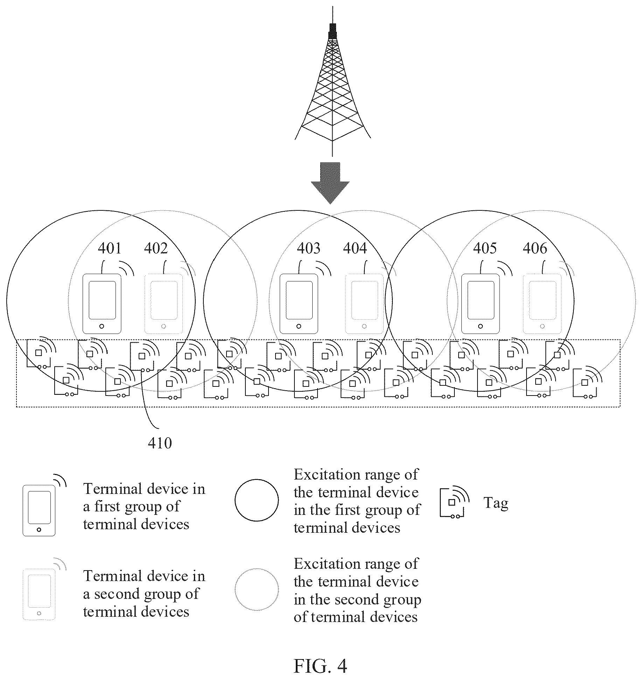

To better describe this embodiment of this application, with reference to FIG. 4, a related embodiment of step S306 of grouping the terminal devices in the list of terminal devices based on the location information to obtain the multiple groups of terminal devices is described in detail. It is assumed that the first area is represented by using a dashed-line box, a terminal device in a first group of terminal devices is represented by using a black terminal device pattern, a terminal device in a second group of terminal devices is represented by using a gray terminal device pattern, and an excitation range of a terminal device is represented by using a circle (an excitation range of the terminal device in the first group of terminal devices is represented by using a black circle, and an excitation range of the terminal device in the second group of terminal devices is represented by using a gray circle).

For example, adjacent terminal devices whose distance is less than the preset threshold are in different groups. As shown in FIG. 4, a distance between a terminal device 401 and a terminal device 402 is less than the preset threshold. For a tag 410, the tag 410 may be in both an excitation range of the terminal device 401 and an excitation range of the terminal device 402. If the terminal device 401 and the terminal device 402 are in different groups (for example, the terminal device 401 is in the first group of terminal devices, and the terminal device 402 is in the second group of terminal devices), the tag 410 may simultaneously use multiple carriers to communicate with the RAN device (that is, the tag 410 may simultaneously use a first carrier corresponding to the first group of terminal devices and a second carrier corresponding to the second group of terminal devices). Use of the multiple carriers can effectively reduce a possibility of a sending conflict between the tag 410 and another tag, and improve access efficiency of the tag. If the terminal device 401 and the terminal device 402 are in a same group (for example, both the terminal device 401 and the terminal device 402 are in the first group of terminal devices), a contention-based random access procedure in which the tag 410 reflects a carrier of the terminal device 401 to communicate with the RAN device and a contention-based random access procedure in which the tag 410 reflects a carrier of the terminal device 402 to communicate with the RAN device are a same contention-based random access procedure, and no additional gain is generated. Therefore, when adjacent terminal devices whose distance is less than the preset threshold are grouped into different groups, access efficiency of a tag can be effectively improved.

For another example, the total excitation range of the terminal devices in the same group among the multiple groups of terminal devices covers the first area. As shown in FIG. 4, a total excitation range of a terminal device 401, a terminal device 403, and a terminal device 405 covers the first area, and a total excitation range of a terminal device 402, a terminal device 404, and a terminal device 406 also covers the first area. When a terminal device in the first group of terminal devices is separately used to excite a tag, all tags in the first area may be excited. This can effectively save resources.

It should be noted that, when the TMF network element groups the terminal devices in the list of terminal devices based on only the service types to obtain the multiple groups of terminal devices, because the TMF network element does not need to group the terminal devices in the list of terminal devices based on the location information, there is no need to initiate a positioning request for the terminal device or obtain the location information of the terminal device. That is, step S303 to step S305 do not need to be performed in the communication method.

It should be noted that the foregoing separately describes related embodiments in which the TMF network element groups the terminal devices in the list of terminal devices based on the location information or the service type. In another embodiment, the TMF network element may alternatively group the terminal devices in the list of terminal devices based on the location information and the service types to obtain the multiple groups of terminal devices. For example, the TMF network element first groups the terminal devices in the list of terminal devices based on the location information to obtain multiple intermediate groups of terminal devices, and then further groups the terminal devices in the multiple intermediate groups of terminal devices based on the service types to obtain the multiple groups of terminal devices. For another example, the TMF network element first groups the terminal devices in the list of terminal devices based on the service type to obtain multiple intermediate groups of terminal devices, and then further groups the terminal devices in the multiple intermediate groups of terminal devices based on the location information to obtain the multiple groups of terminal devices. Details are not described again.

It should be noted that, in another implementation, the TMF network element may alternatively obtain one group of terminal devices by grouping the terminal devices in the list of terminal devices based on the location information and/or the service type. Details are not described.

S307: The TMF network element sends a third request message to the AMF network element, and correspondingly, the AMF network element receives the third request message from the TMF network element. The third request message is used to request to perform an operation on the tag in the first area. The third request message includes group information of multiple groups of terminal devices in the first area that have the capability of exciting a P-IoT tag.

The group information is used to determine corresponding carrier excitation. The group information includes one or more terminal device identifiers and/or corresponding group numbers, and the group number indicates a group of terminal devices that corresponds to a terminal device. In embodiments of this application, the group number may be denoted by a number. For example, three groups of terminal devices are numbered 0, 1, and 2 in sequence. The group number may be denoted by a number and a symbol. For example, three groups of terminal devices are numbered 0-0, 0-1, and 1-0 in sequence. The group number may alternatively be denoted by a Chinese character. For example, three groups of terminal devices are numbered Jia, Yi, and Bing in sequence. The foregoing examples are merely used to explain this application. During specific implementation, the group number may alternatively have more representation forms. This shall not be construed as a limitation herein. It should be noted that for descriptions of the terminal device identifier, refer to step S302. Details are not described again.

It should be noted that when the TMF network element obtains the multiple groups of terminal devices through grouping, the group information may include one or more terminal device identifiers and/or corresponding group numbers. When the TMF network element obtains one group of terminal devices through grouping, the group information may include one or more terminal device identifiers.

It should be noted that the operation requested to be performed on the tag in the first area by using the third request message includes but is not limited to one or more of an inventory operation, a read operation, a positioning operation, a write operation, or a disable operation.

It should be noted that tag operations requested by using the second request message and the third request message described in this embodiment of this application may be the same. For example, both the second request message and the third request message are used to request to perform an inventory operation on the tag.

S308: The AMF network element sends a first request message to the RAN device, and correspondingly, the RAN device receives the first request message from the AMF network element. The first request message includes the group information of the multiple groups of terminal devices, and the first request message is used to request the RAN device to trigger a tag to perform random access.

It should be noted that, when the RAN device receives the first request message, the RAN device may trigger the tag to perform random access. For related descriptions of random access, refer to FIG. 2. Details are not described again.

It should be noted that the first request message includes an NGAP identifier corresponding to a terminal device identifier. Therefore, before the AMF network element performs step S308, the AMF network element further needs to perform identifier conversion on the terminal device identifier in the third request message based on a correspondence between a terminal device identifier and an NGAP identifier, to obtain a corresponding NGAP identifier. The NGAP identifier indicates a transmission interface of the terminal device.

S309: The RAN device determines multiple groups of terminal devices that have the capability of exciting a P-IoT tag.

Optionally, the RAN device may determine, based on the group information of the multiple groups of terminal devices included in the first request message, the multiple groups of terminal devices that have the capability of exciting a P-IoT tag.

S310: The RAN device determines first information for each of the multiple groups of terminal devices, where the first information indicates a terminal device in the corresponding group of terminal devices to trigger corresponding carrier excitation, and the carrier excitation is used to excite a P-IoT tag.

Terminal devices in a same group among the multiple groups of terminal devices correspond to a same carrier. In other words, terminal devices in different groups among the multiple groups of terminal devices correspond to different carriers. For example, the multiple groups of terminal devices include a first group of terminal devices, a second group of terminal devices, and a third group of terminal devices, the first group of terminal devices corresponds to a first carrier, the second group of terminal devices corresponds to a second carrier, and the third group of terminal devices corresponds to a third carrier. In this case, for the multiple groups of terminal devices, the RAN device determines first information corresponding to the first group of terminal devices, first information corresponding to the second group of terminal devices, and first information corresponding to the third group of terminal devices. The first information for the first group of terminal devices indicates a terminal device in the first group of terminal devices to excite a P-IoT tag by using the first carrier, the first information for the second group of terminal devices indicates a terminal device in the second group of terminal devices to excite a P-IoT tag by using the second carrier, and the first information for the third group of terminal devices indicates a terminal device in the third group of terminal devices to excite a P-IoT tag by using the third carrier.

It should be noted that the first carrier, the second carrier, and the third carrier are different carriers. Different carriers include carriers of different quantities and/or carriers at different frequencies.

Optionally, carriers respectively corresponding to the multiple groups of terminal devices may be indicated by the RAN device. For example, the RAN device may indicate, by using the first information, the carriers respectively corresponding to the multiple groups of terminal devices.

S311: The RAN device sends the corresponding first information to each of the multiple groups of terminal devices, and correspondingly, the terminal device receives the first information from the accessed RAN device.

That is, the RAN device may send, to each group of terminal devices, the first information corresponding to each group of terminal devices. Correspondingly, a terminal device in each group of terminal devices receives the first information corresponding to the group of terminal devices. Using the terminal device in the first group of terminal devices as an example, the RAN device may send the first information for the first group of terminal devices to the terminal device, and the terminal device may receive the first information for the first group of terminal devices, where the first information indicates the terminal device to excite a P-IoT tag by using the first carrier.

S312: The terminal device triggers the corresponding carrier excitation based on the first information.

For example, for the terminal device in the first group of terminal devices, the terminal device may excite a P-IoT tag by using the first carrier.

S313: The tag randomly accesses the RAN device, and performs a tag operation.

In an optional implementation, when the tag receives a selection message broadcast by the RAN device, the tag may determine whether the tag belongs to a tag range indicated by the selection message broadcast by the RAN device; and if the tag belongs to the tag range, feed back a corresponding random number to the RAN device in a contention manner, so as to randomly access the RAN device.

The tag operation is the operation requested by using the second request message and/or the operation requested by using the third request message. For example, when the second request message is used to request to perform an inventory operation on the tag in the first area, the tag randomly accesses the RAN device and performs the inventory operation.

It should be noted that, in a process of performing the tag operation, a frequency of a carrier in an uplink transmission direction may be different from a frequency of a carrier in a downlink transmission direction. In the uplink transmission direction, the tag performs uplink transmission by using an FDD frequency band of the terminal device, and in the downlink transmission direction, the RAN device performs transmission by using an FDD downlink frequency band.

S314: The RAN device sends uplink tag data to the AMF network element; when receiving the uplink tag data from the RAN device, the AMF network element sends the uplink tag data to the TMF network element; and when receiving the uplink tag data from the AMF network element, the TMF network element sends the uplink tag data to the AF network element.

Specific content of the uplink tag data is related to the tag operation. For example, when the tag operation is an inventory operation, the uplink tag data is an identifier of the tag. For another example, when the tag operation is a read operation, the uplink tag data is stored data of the tag.

S315: The RAN device sends corresponding fourth information to each of the multiple groups of terminal devices, and correspondingly, the terminal device receives the fourth information from the accessed RAN device. The fourth information indicates the terminal device in the corresponding group of terminal devices to disable the corresponding carrier excitation.

Corresponding to step S311, the RAN device may also send the corresponding fourth information to each of the multiple groups of terminal devices, and correspondingly, the terminal device receives the fourth information from the accessed RAN device. The fourth information indicates the terminal device in the corresponding group of terminal devices to disable the corresponding carrier excitation.

Step S315 is performed when at least one of the following conditions is met: (1) The RAN device determines that the tag operation is completed. (2) The RAN device receives indication information from a core network device (for example, the AMF network element), where the indication information indicates the RAN device to send the corresponding fourth information to each of the multiple groups of terminal devices.

Optionally, the RAN device may determine, according to a service procedure corresponding to the tag operation, that the tag operation is completed. For example, if the tag operation is an inventory operation, when receiving one NAS message, the RAN device may determine that the inventory operation is completed. For another example, if the tag operation is a read operation, when receiving three NAS messages, the RAN device may determine that the read operation is completed.

S316: The terminal device disables the corresponding carrier excitation based on the fourth information.

It should be noted that, that the terminal device disables the corresponding carrier excitation based on the fourth information may also be understood as that the terminal device cannot use a carrier of a group of terminal devices corresponding to the terminal device to excite a P-IoT tag.

It can be learned that the RAN device may indicate, by using the fourth information, the terminal device in the group of terminal devices to disable the corresponding carrier excitation, so as to avoid that the terminal device continues to send, when a tag operation is completed, a carrier used to excite a P-IoT tag, thereby effectively saving resources.

In this embodiment of this application, compared with an existing manner in which the RAN device excites a P-IoT tag, because the terminal device can be deployed more flexibly, when the terminal device is used to excite a P-IoT tag, a communication distance of a passive tag can be effectively ensured, thereby effectively increasing an excitation distance. In addition, because a carrier used to excite the P-IoT tag belongs to a licensed uplink FDD frequency band of the terminal device, the tag may reflect the licensed uplink FDD frequency band to communicate with the RAN device, so that when transmit power is increased, a communication distance can be further increased, thereby further increasing an excitation distance.

In addition, the TMF network element in this embodiment of this application may group terminal devices that have the capability of exciting a P-IoT tag, to obtain the multiple groups of terminal devices. When the TMF network element sends the group information of the multiple groups of terminal devices to the RAN device through the AMF network element, the RAN device may directly determine the multiple groups of terminal devices based on the group information. The RAN device may determine the corresponding first information for each of the multiple groups of terminal devices, and indicate, by using the first information, the terminal device in the corresponding group of terminal devices to trigger the corresponding carrier excitation, so that the terminal device can be effectively indicated to trigger the corresponding carrier excitation. In addition, because the RAN device indicates different first information for different groups of terminal devices, and the different first information indicates terminal devices in the different groups of terminal devices to excite a P-IoT tag by using different carriers, the RAN device can efficiently allocate communication resources. In addition, because the RAN device indicates different carriers for different groups of terminal devices, and use of multiple carriers can effectively reduce a possibility of a sending conflict between tags, access efficiency of a tag can be effectively improved when communication resources are limited, that is, a capacity of the tag can be effectively improved when communication resources are limited.

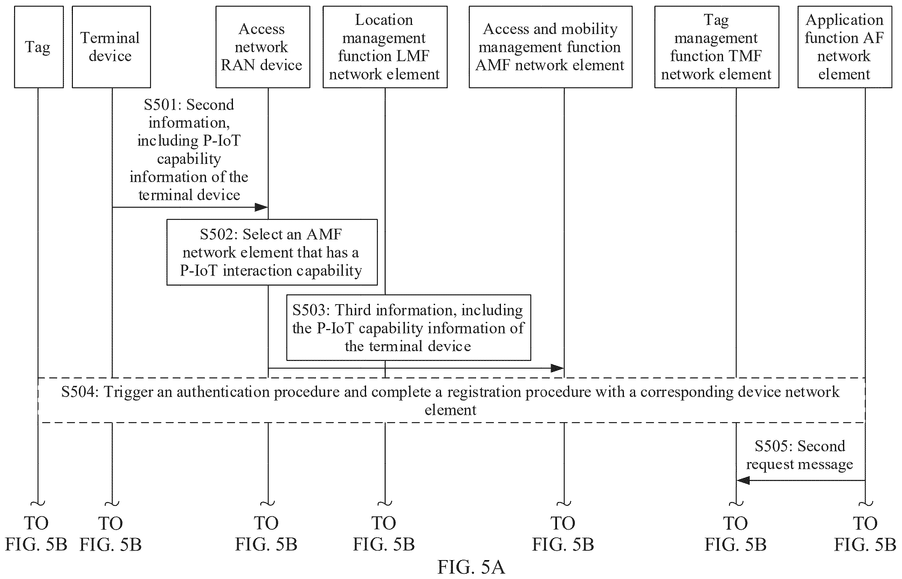

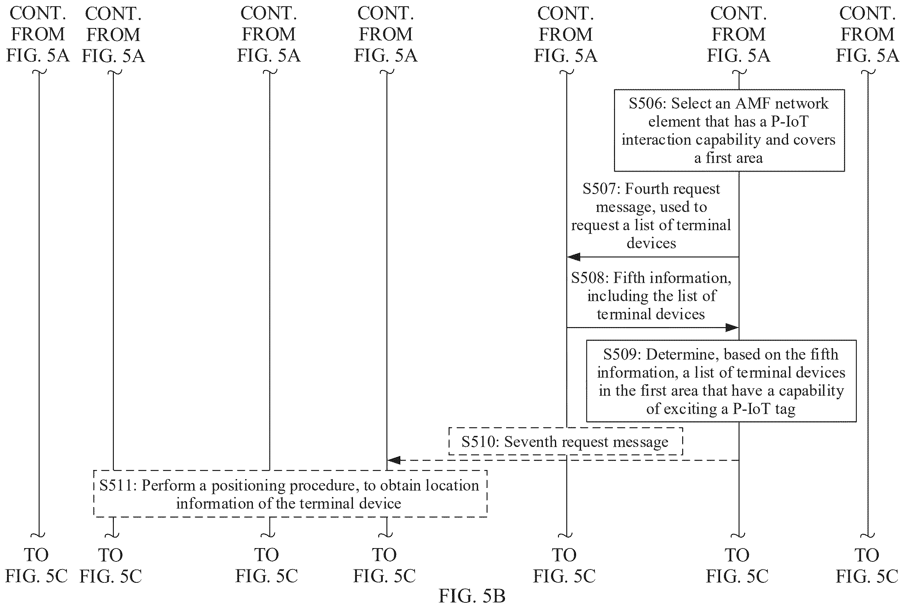

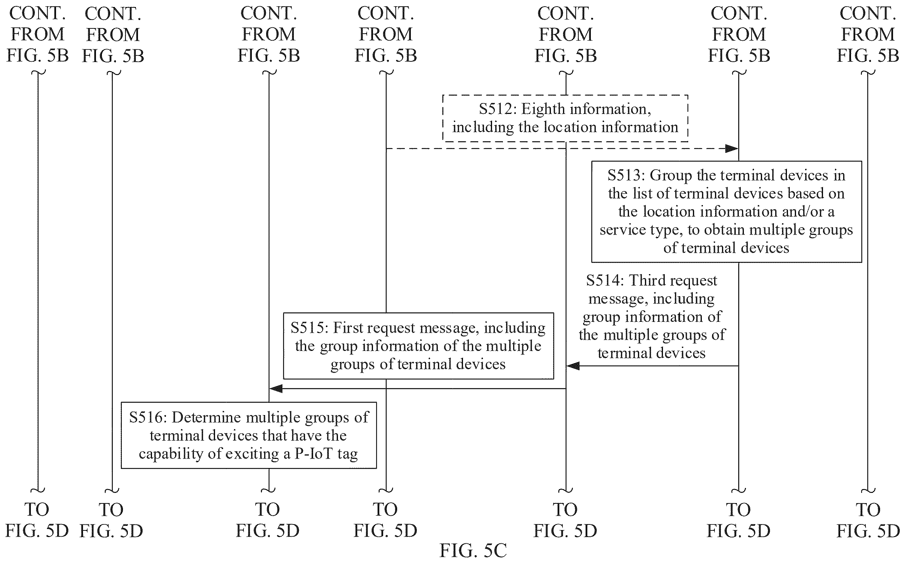

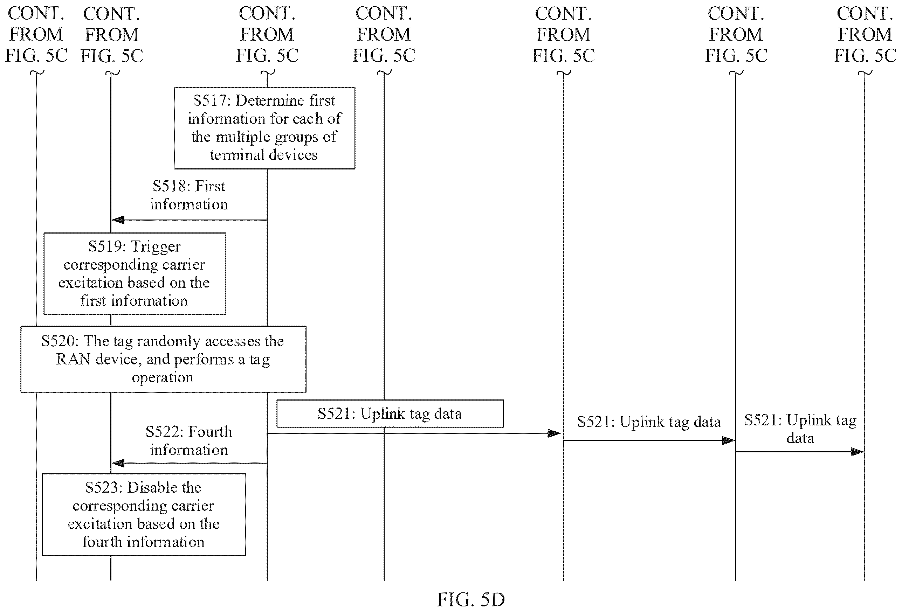

Refer to FIG. 5A to FIG. 5D. FIG. 5A to FIG. 5D are a schematic flowchart of another communication method. Compared with the communication method in FIG. 3A to FIG. 3C, in the communication method in FIG. 5A to FIG. 5D, FIG. 5A to FIG. 5D describe that a terminal device reports P-IoT capability information to an accessed RAN device in a registration procedure, and the P-IoT capability information indicates that the terminal device is a terminal device having a capability of exciting a P-IoT tag, so that a TMF network element subsequently determines a list of terminal devices in a first area that have the capability of exciting a P-IoT tag, and groups the terminal devices in the list of terminal devices to obtain multiple groups of terminal devices. Thus, when the TMF network element sends group information of the multiple groups of terminal devices to the RAN device through an AMF network element, it helps the RAN device efficiently allocate communication resources based on the group information. As shown in FIG. 5A to FIG. 5D, the communication method may include but is not limited to the following steps.

S501: The terminal device sends second information to the accessed RAN device, and correspondingly, the RAN device receives the second information, where the second information includes P-IoT capability information of the terminal device.

Optionally, the second information may be AN information. For example, the terminal device sends the second information to the accessed RAN device by using an AN message, where the AN message includes a NAS registration request message and the AN information, the AN information includes the P-IoT capability information of the terminal device, and the NAS registration request message is used to request to access the RAN device.

S502: The RAN device selects an AMF network element that has a P-IoT interaction capability.

Optionally, after receiving the AN message, the RAN device may select, based on a parameter in the AN message, the AMF network element that has the P-IoT interaction capability.

S503: The RAN device sends third information to the AMF network element, and correspondingly, the AMF network element receives the third information from the RAN device. The third information includes the P-IoT capability information of the terminal device accessing the RAN device.

Optionally, the third information may be carried in an N2 message. For example, the N2 message includes a NAS registration request message and the third information, the NAS registration request message is used to request to access a core network device, and the third information includes the P-IoT capability information of the terminal device.

It can be learned from step S501 to step S503 that the terminal device may report the P-IoT capability information to the accessed RAN device, so that the RAN device may send the P-IoT capability information of the terminal device to the AMF network element that has the P-IoT interaction capability.

S504: Trigger an authentication procedure and complete a registration procedure with a corresponding device network element.

Optionally, the registration procedure includes but is not limited to at least one of the following: bidirectional authentication, authentication, or authorization. It should be noted that, in a procedure such as bidirectional authentication, authentication, or authorization performed between the terminal device and a network device, the terminal device and the network device need to participate. The network device may include the following network elements: a RAN device, an AMF network element, an AUSF network element, a UDM network element, and the like.

S505: An AF network element sends a second request message to the TMF network element, and correspondingly, the TMF network element receives the second request message from the AF network element, where the second request message is used to request to perform an operation on a tag in a first area.

It should be noted that for related descriptions, refer to step S301 in FIG. 3A to FIG. 3C. Details are not described again.

S506: The TMF network element selects an AMF network element that has a P-IoT interaction capability and covers the first area.

It should be noted that the AMF network element selected by the TMF network element in step S506 has the P-IoT interaction capability and covers the first area, and the AMF network element selected by the RAN device in step S502 has the P-IoT interaction capability. The AMF network element selected in step S506 may be the same as the AMF network element selected by the RAN device in step S502, or the AMF network element selected in step S506 is a subset of the AMF network element selected by the RAN device in step S502.

S507: The TMF network element sends a fourth request message to the AMF network element, and correspondingly, the AMF network element receives the fourth request message from the TMF network element, where the fourth request message is used to request a list of terminal devices in the first area that have the capability of exciting a P-IoT tag.

Optionally, the fourth request message may include location information, for example, one or more pieces of location information in base station information, cell information, coordinate information, or longitude and latitude information. The location information may indicate the first area.

S508: The AMF network element sends fifth information to the TMF network element, and correspondingly, the TMF network element receives the fifth information from the AMF network element, where the fifth information includes the list of terminal devices in the first area that have the capability of exciting a P-IoT tag.

For related descriptions of the list of terminal devices, refer to step S302 in FIG. 3A to FIG. 3C. Details are not described again.

It should be noted that before performing S508, the AMF network element further needs to determine, based on P-IoT capability information of each terminal device in the first area, a terminal device in the first area that has the capability of exciting a P-IoT tag. The P-IoT capability information of each terminal device in the first area is determined by using the third information in step S503.

Optionally, if the AMF network element selected by the TMF network element in step S506 does not include a terminal device having the capability of exciting a P-IoT tag, in S508, the AMF network element may send prompt information to the TMF network element, where the prompt information indicates that the list of terminal devices does not exist. In this case, the TMF network element may perform AMF reselection or give a feedback to the AF network element to end the procedure.

S509: The TMF network element determines, based on the fifth information, the list of terminal devices in the first area that have the capability of exciting a P-IoT tag.

Optionally, in some embodiments, step S509 in the communication method may not be performed. This is not limited.

S510: The TMF network element sends a seventh request message to an LMF network element, and correspondingly, the LMF network element receives the seventh request message from the TMF network element, where the seventh request message includes the list of terminal devices and an LCS association identifier corresponding to each terminal device in the list of terminal devices.

It should be noted that the LCS association identifier corresponding to each terminal device in the list of terminal devices may be sent by the AMF network element to the TMF network element by using the fifth information. In other words, the fifth information in step S508 further includes the LCS association identifier corresponding to each terminal device in the list of terminal devices.

S511: The LMF network element performs a positioning procedure, to obtain location information of the terminal device.

S512: The LMF network element sends eighth information to the TMF network element, and correspondingly, the TMF network element receives the eighth information from the LMF network element, where the eighth information includes the location information of each terminal device in the list of terminal devices.

S513: The TMF network element groups the terminal devices in the list of terminal devices based on the location information and/or a service type, to obtain multiple groups of terminal devices.

S514: The TMF network element sends a third request message to the AMF network element, and correspondingly, the AMF network element receives the third request message from the TMF network element. The third request message is used to request to perform an operation on the tag in the first area. The third request message includes group information of multiple groups of terminal devices in the first area that have the capability of exciting a P-IoT tag.

S515: The AMF network element sends a first request message to the RAN device, where first request message includes the group information of the multiple groups of terminal devices, and the first request message is used to request the RAN device to trigger a tag to perform random access.

S516: The RAN device determines the multiple groups of terminal devices that have the capability of exciting a P-IoT tag.

Optionally, the RAN device may determine, based on the group information of the multiple groups of terminal devices included in the first request message, the multiple groups of terminal devices that have the capability of exciting a P-IoT tag.

S517: The RAN device determines first information for each of the multiple groups of terminal devices, where the first information indicates a terminal device in the corresponding group of terminal devices to trigger corresponding carrier excitation, and the carrier excitation is used to excite a P-IoT tag.

S518: The RAN device sends the corresponding first information to each of the multiple groups of terminal devices, and correspondingly, the terminal device receives the first information from the accessed RAN device.

S519: The terminal device triggers the corresponding carrier excitation based on the first information.

S520: The tag randomly accesses the RAN device, and performs a tag operation.

S521: The RAN device sends uplink tag data to the AMF network element; when receiving the uplink tag data from the RAN device, the AMF network element sends the uplink tag data to the TMF network element; and when receiving the uplink tag data from the AMF network element, the TMF network element sends the uplink tag data to the AF network element.

S522: The RAN device sends corresponding fourth information to each of the multiple groups of terminal devices, and correspondingly, the terminal device receives the fourth information from the accessed RAN device. The fourth information indicates the terminal device in the corresponding group of terminal devices to disable the corresponding carrier excitation.

S523: The terminal device disables the corresponding carrier excitation based on the fourth information.

It should be noted that for related embodiments of step S510 to step S523, refer to step S303 to step S316 in FIG. 3A to FIG. 3C. Details are not described again.

It can be learned that in this embodiment of this application, the terminal device may report the P-IoT capability information of the terminal device to the accessed RAN device through the registration procedure. When receiving the P-IoT capability information of the terminal device, the RAN device may send the P-IoT capability information of the terminal device to the AMF network element that has the P-IoT interaction capability, so that the AMF network element can determine, based on the P-IoT capability information of the terminal device, a terminal device in the first area that has the capability of exciting a P-IoT tag, and generate the corresponding list of terminal devices. When the AMF network element sends the list of terminal devices to the TMF network element by using the fifth information, it helps the TMF network element determine the list of terminal devices in the first area that have the capability of exciting a P-IoT tag. When the TMF network element sends the list of terminal devices to the RAN device, the RAN device can effectively identify a terminal device having the capability of exciting a P-IoT tag.

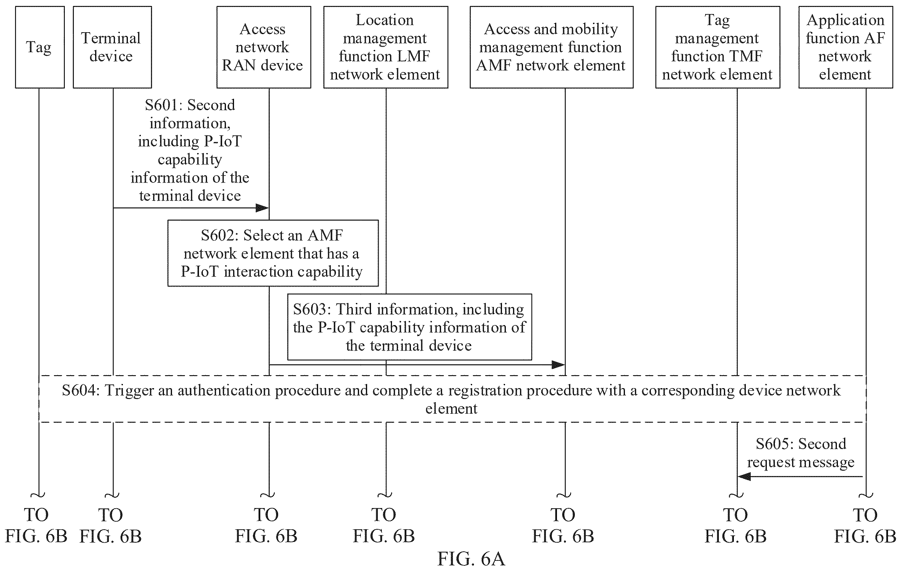

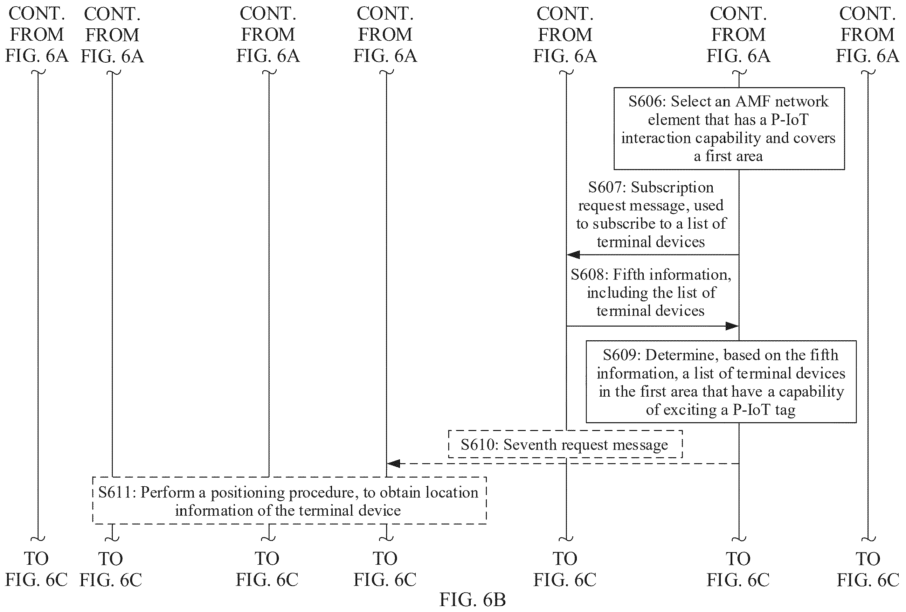

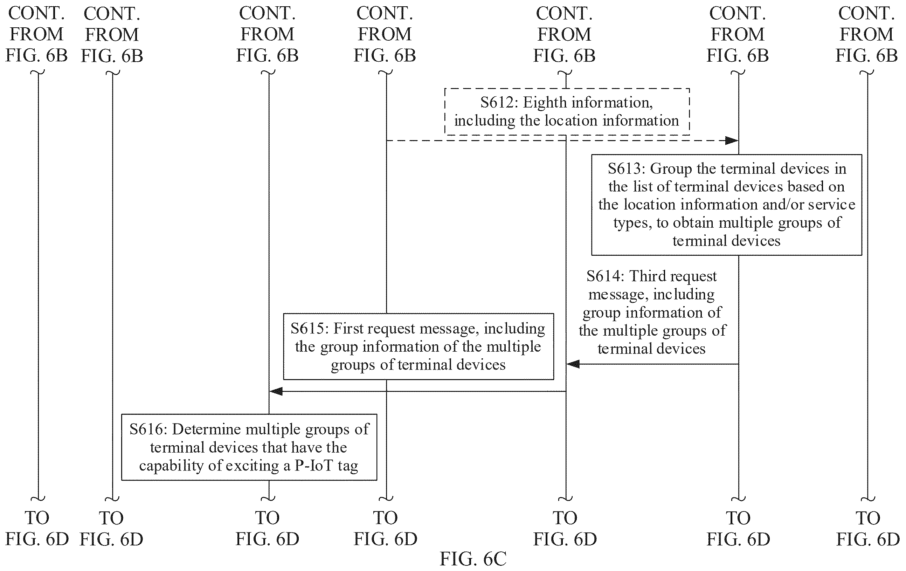

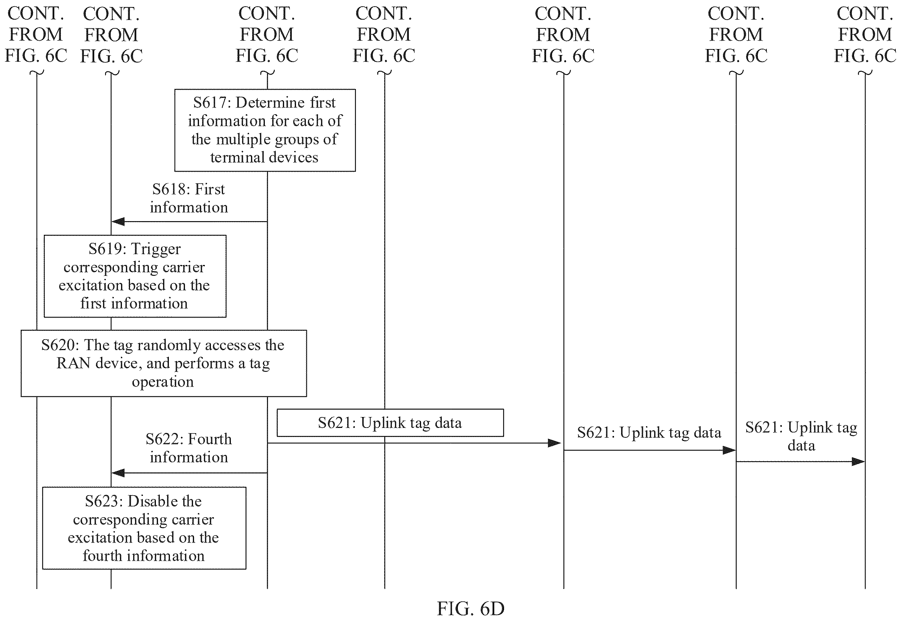

Refer to FIG. 6A to FIG. 6D. FIG. 6A to FIG. 6D are a schematic flowchart of another communication method. Compared with the communication method in FIG. 5A to FIG. 5D, in the communication method in FIG. 6A to FIG. 6D, after a TMF network element determines an AMF network element that has a P-IoT interaction capability, the TMF network element may obtain, from the AMF network element in a subscription manner, a list of terminal devices in a first area that have a capability of exciting a P-IoT tag. As shown in FIG. 6A to FIG. 6D, the communication method may include but is not limited to the following steps.

S601: A terminal device sends second information to an accessed RAN device, and correspondingly, the RAN device receives the second information, where the second information includes P-IoT capability information of the terminal device.

S602: The RAN device selects an AMF network element that has a P-IoT interaction capability.

S603: The RAN device sends third information to the AMF network element, and correspondingly, the AMF network element receives the third information from the RAN device. The third information includes the P-IoT capability information of the terminal device accessing the RAN device.

S604: Trigger an authentication procedure and complete a registration procedure with a corresponding device network element.

It should be noted that for related descriptions of step S601 to step S604, refer to step S501 to step S504 in FIG. 5A to FIG. 5D. Details are not described again.

S605: An AF network element sends a second request message to the TMF network element, and correspondingly, the TMF network element receives the second request message from the AF network element, where the second request message is used to request to perform an operation on a tag in a first area.

It should be noted that for related descriptions, refer to step S301 in FIG. 3A to FIG. 3C. Details are not described again.

S606: The TMF network element selects an AMF network element that has a P-IoT interaction capability and covers the first area.

It should be noted that for related descriptions, refer to step S506 in FIG. 5A to FIG. 5D. Details are not described again.

S607: The TMF network element sends a fourth request message to the AMF network element, and correspondingly, the AMF network element receives the fourth request message from the TMF network element, where the fourth request message is a subscription request message, and the subscription request message is used to subscribe to a list of terminal devices in the first area that have a capability of exciting a P-IoT tag.

S608: The AMF network element sends fifth information to the TMF network element, and correspondingly, the TMF network element receives the fifth information from the AMF network element, where the fifth information includes the list of terminal devices in the first area that have the capability of exciting a P-IoT tag.

Step S608 is performed when the AMF network element receives the subscription request message or the AMF network element has received the subscription request message and the subscribed list of terminal devices is updated.

It should be noted that for other related descriptions of S608, refer to step S508 in FIG. 5A to FIG. 5D. Details are not described again.

S609: The TMF network element determines, based on the fifth information, the list of terminal devices in the first area that have the capability of exciting a P-IoT tag.

It should be noted that for a non-initial tag operation, that is, if the TMF network element has sent a subscription request message to the AMF network element corresponding to the first area, the TMF network element locally stores the list of terminal devices in the corresponding first area that have the capability of exciting a P-IoT tag, and the TMF network element does not need to send a subscription request message to the AMF network element again. In this case, step S606 to step S609 may be omitted.

In another implementation, the TMF network element may alternatively send a subscription request message in advance to all AMFs having a P-IoT interaction capability, to subscribe to lists of terminal devices in all areas that have the capability of exciting a P-IoT tag. In this case, when the TMF network element receives the second request message, regardless of an initial tag operation, the TMF network element does not need to send a subscription request message to the AMF network element to obtain a related list of terminal devices, thereby effectively improving service efficiency. However, in this case, the AMF network element needs to detect, in real time, changes of P-IoT capability information of all terminal devices that access the RAN device, thereby increasing overheads of the AMF network element.

It should be noted that for other related descriptions of S609, refer to step S509 in FIG. 5A to FIG. 5D. Details are not described again.

S610: The TMF network element sends a seventh request message to an LMF network element, and correspondingly, the LMF network element receives the seventh request message from the TMF network element, where the seventh request message includes the list of terminal devices and an LCS association identifier corresponding to each terminal device in the list of terminal devices.

S611: The LMF network element performs a positioning procedure, to obtain location information of the terminal device.

S612: The LMF network element sends eighth information to the TMF network element, and correspondingly, the TMF network element receives the eighth information from the LMF network element, where the eighth information includes the location information of each terminal device in the list of terminal devices.

S613: The TMF network element groups the terminal devices in the list of terminal devices based on the location information and/or a service type, to obtain multiple groups of terminal devices.

S614: The TMF network element sends a third request message to the AMF network element, and correspondingly, the AMF network element receives the third request message from the TMF network element. The third request message is used to request to perform an operation on the tag in the first area. The third request message includes group information of multiple groups of terminal devices in the first area that have the capability of exciting a P-IoT tag.

S615: The AMF network element sends a first request message to the RAN device, where first request message includes the group information of the multiple groups of terminal devices, and the first request message is used to request the RAN device to trigger a tag to perform random access.

S616: The RAN device determines the multiple groups of terminal devices that have the capability of exciting a P-IoT tag.

Optionally, the RAN device determines, based on the group information of the multiple groups of terminal devices included in the first request message, the multiple groups of terminal devices that have the capability of exciting a P-IoT tag.

S617: The RAN device determines first information for each of the multiple groups of terminal devices, where the first information indicates a terminal device in the corresponding group of terminal devices to trigger corresponding carrier excitation, and the carrier excitation is used to excite a P-IoT tag.

S618: The RAN device sends the corresponding first information to each of the multiple groups of terminal devices, and correspondingly, the terminal device receives the first information from the accessed RAN device.

S619: The terminal device triggers the corresponding carrier excitation based on the first information.

S620: The tag randomly accesses the RAN device, and performs a tag operation.

S621: The RAN device sends uplink tag data to the AMF network element; when receiving the uplink tag data from the RAN device, the AMF network element sends the uplink tag data to the TMF network element; and when receiving the uplink tag data from the AMF network element, the TMF network element sends the uplink tag data to the AF network element.

S622: The RAN device sends corresponding fourth information to each of the multiple groups of terminal devices, and correspondingly, the terminal device receives the fourth information from the accessed RAN device. The fourth information indicates the terminal device in the corresponding group of terminal devices to disable the corresponding carrier excitation.

S623: The terminal device disables the corresponding carrier excitation based on the fourth information.

It should be noted that for related embodiments of step S610 to step S623, refer to step S510 to step S523 in FIG. 5A to FIG. 5D. Details are not described again.

It can be learned that in this embodiment of this application, the TMF network element may obtain, from the AMF network element in a subscription manner, the list of terminal devices in the first area that have the capability of exciting a P-IoT tag, thereby reducing signaling interaction between the TMF network element and the AMF network element, and effectively improving operation efficiency when tag operations in a same area are performed.

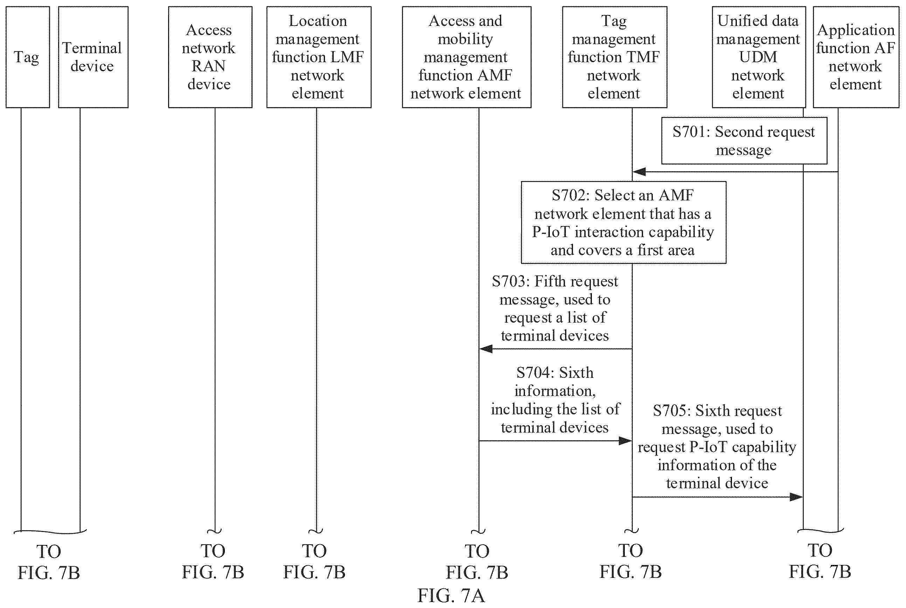

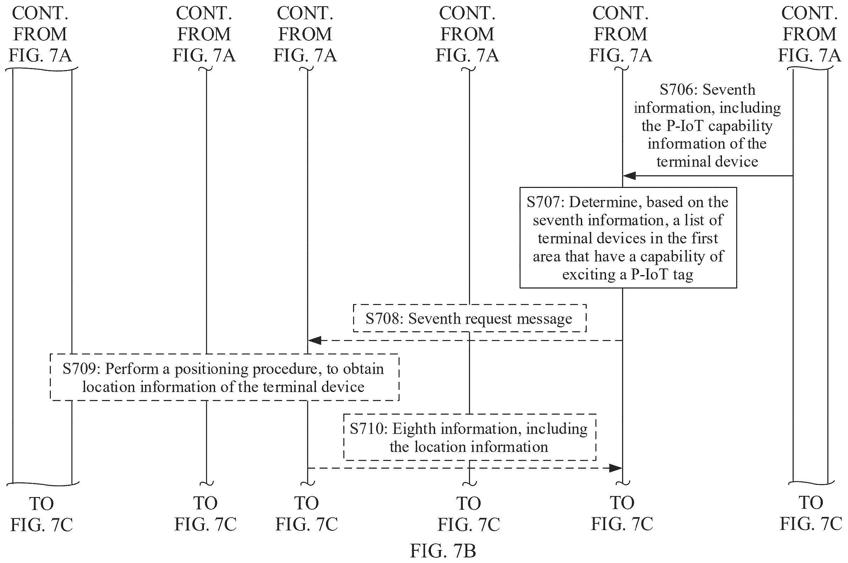

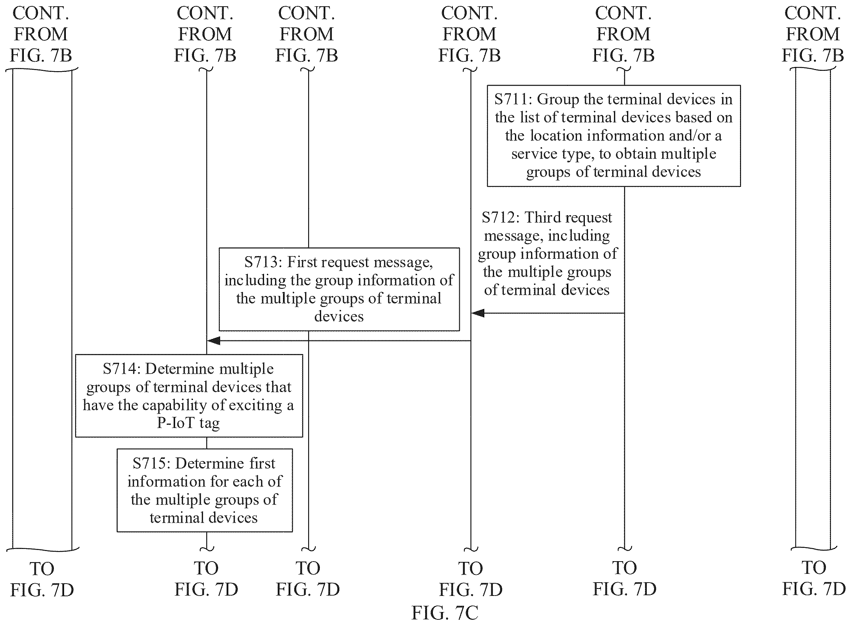

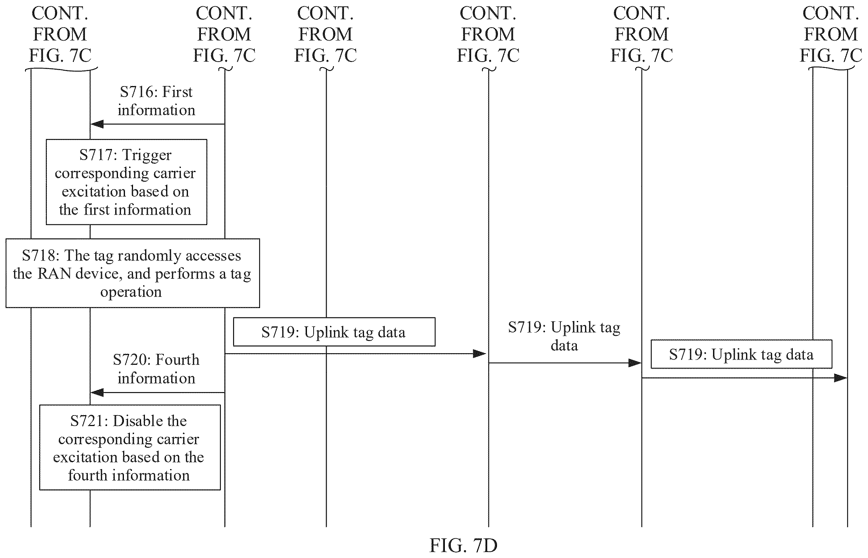

Refer to FIG. 7A to FIG. 7D. FIG. 7A to FIG. 7D are a schematic flowchart of another communication method. Compared with the communication method in FIG. 5A to FIG. 5D, in the communication method in FIG. 7A to FIG. 7D, a terminal device does not report P-IoT capability information in a registration procedure, but the P-IoT capability information is included in subscription information of the terminal device. After a TMF network element obtains a list of terminal devices in a first area from an AMF network element, the TMF network element may obtain the P-IoT capability information of the terminal device from subscription information managed by a UDM network element, to determine a list of terminal devices in the first area that have a capability of exciting a P-IoT tag. As shown in FIG. 7A to FIG. 7D, the communication method may include but is not limited to the following steps.

S701: An AF network element sends a second request message to the TMF network element, and correspondingly, the TMF network element receives the second request message from the AF network element, where the second request message is used to request to perform an operation on a tag in a first area.

It should be noted that for related descriptions, refer to step S301 in FIG. 3A to FIG. 3C. Details are not described again.

S702: The TMF network element selects an AMF network element that has a P-IoT interaction capability and covers the first area.

It should be noted that for related descriptions, refer to step S506 in FIG. 5A to FIG. 5D. Details are not described again.

S703: The TMF network element sends a fifth request message to the AMF network element, and correspondingly, the AMF network element receives the fifth request message from the TMF network element, where the fifth request message is used to request a list of terminal devices in the first area.

Optionally, the fifth request message may include location information, for example, one or more pieces of location information in base station information, cell information, coordinate information, or longitude and latitude information. The location information may indicate the first area.

In another implementation, the fifth request message may alternatively be a subscription request message, and the subscription request message may be used to subscribe to the list of terminal devices in the first area. For details, refer to related descriptions of the fourth request message in FIG. 6A to FIG. 6D. Details are not described again.

S704: The AMF network element sends sixth information to the TMF network element, and correspondingly, the TMF network element receives the sixth information from the AMF network element, where the sixth information includes the list of terminal devices in the first area.

It should be noted that a terminal device identifier included in the list of terminal devices in the sixth information is used to identify a terminal device in the first area.

S705: The TMF network element sends a sixth request message to the UDM network element, and correspondingly, the UDM network element receives the sixth request message from the TMF network element, where the sixth request message includes the list of terminal devices in the first area, and the sixth request message is used to request P-IoT capability information of the terminal device in the first area.

In an optional implementation, when the UDM network element receives the sixth request message from the TMF network element, the UDM network element may obtain P-IoT capability information of each terminal device in the first area from subscription information of each terminal device.

S706: The UDM network element sends seventh information to the TMF network element, and correspondingly, the TMF network element receives the seventh information from the UDM network element, where the seventh information includes the P-IoT capability information of the terminal device in the first area. S707: The TMF network element determines, based on the seventh information, the list of terminal devices in the first area that have the capability of exciting a P-IoT tag.

Specifically, the TMF network element may determine, based on the seventh information, a terminal device in the first area that has the capability of exciting a P-IoT tag, and generate a corresponding list of terminal devices.

It can be learned that, according to step S702 to step S707, the TMF network element may obtain the list of terminal devices in the first area from the AMF network element, and obtain the P-IoT capability information of each terminal device in the list of terminal devices from the UDM network element, so that the TMF network element may determine the list of terminal devices in the first area that have the capability of exciting a P-IoT tag.

It should be noted that in another embodiment, if the UDM network element includes location information of the terminal device, the TMF network element may directly obtain, from the UDM network element, the list of terminal devices in the first area that have the capability of exciting a P-IoT tag, thereby reducing signaling interaction between the TMF network element and the AMF network element. S708: The TMF network element sends a seventh request message to an LMF network element, and correspondingly, the LMF network element receives the seventh request message from the TMF network element, where the seventh request message includes the list of terminal devices and an LCS association identifier corresponding to each terminal device in the list of terminal devices.

It should be noted that the LCS association identifier corresponding to each terminal device in the list of terminal devices may be sent by the AMF network element to the TMF network element by using the sixth information. In other words, the sixth information in step S704 further includes the LCS association identifier corresponding to each terminal device in the list of terminal devices.

S709: The LMF network element performs a positioning procedure, to obtain location information of the terminal device.

S710: The LMF network element sends eighth information to the TMF network element, and correspondingly, the TMF network element receives the eighth information from the LMF network element, where the eighth information includes the location information of each terminal device in the list of terminal devices.

S711: The TMF network element groups the terminal devices in the list of terminal devices based on the location information and/or a service type, to obtain multiple groups of terminal devices.

S712: The TMF network element sends a third request message to the AMF network element, and correspondingly, the AMF network element receives the third request message from the TMF network element. The third request message is used to request to perform an operation on the tag in the first area. The third request message includes group information of multiple groups of terminal devices in the first area that have the capability of exciting a P-IoT tag.

S713: The AMF network element sends a first request message to the RAN device, where first request message includes the group information of the multiple groups of terminal devices, and the first request message is used to request the RAN device to trigger a tag to perform random access.

S714: The RAN device determines the multiple groups of terminal devices that have the capability of exciting a P-IoT tag.

Optionally, the RAN device determines, based on the group information of the multiple groups of terminal devices included in the first request message, the multiple groups of terminal devices that have the capability of exciting a P-IoT tag.

S715: The RAN device determines first information for each of the multiple groups of terminal devices, where the first information indicates a terminal device in the corresponding group of terminal devices to trigger corresponding carrier excitation, and the carrier excitation is used to excite a P-IoT tag.

S716: The RAN device sends the corresponding first information to each of the multiple groups of terminal devices, and correspondingly, the terminal device receives the first information from the accessed RAN device.

S717: The terminal device triggers the corresponding carrier excitation based on the first information.

S718: The tag randomly accesses the RAN device, and performs a tag operation.

S719: The RAN device sends uplink tag data to the AMF network element; when receiving the uplink tag data from the RAN device, the AMF network element sends the uplink tag data to the TMF network element; and when receiving the uplink tag data from the AMF network element, the TMF network element sends the uplink tag data to the AF network element.

S720: The RAN device sends corresponding fourth information to each of the multiple groups of terminal devices, and correspondingly, the terminal device receives the fourth information from the accessed RAN device. The fourth information indicates the terminal device in the corresponding group of terminal devices to disable the corresponding carrier excitation.

S721: The terminal device disables the corresponding carrier excitation based on the fourth information.

It should be noted that for related embodiments of step S709 to step S721, refer to step S511 to step S523 in FIG. 5A to FIG. 5D. Details are not described again.

It can be learned that in this embodiment of this application, the terminal device does not report the P-IoT capability information of the terminal device, but includes the P-IoT capability information in the subscription information managed by the UDM network element, so that the TMF network element can obtain the P-IoT capability information of each terminal device from the UDM network element. This helps the TMF network element determine, based on the P-IoT capability information, the terminal device in the first area that has the capability of exciting a P-IoT tag, and generates the corresponding list of terminal devices. Because the P-IoT capability information of the terminal device is carried in the subscription information managed by the UDM network element, the terminal device does not need to report the P-IoT capability information through a registration procedure, so that execution of a registration service is not affected when the terminal device reports the P-IoT capability information.

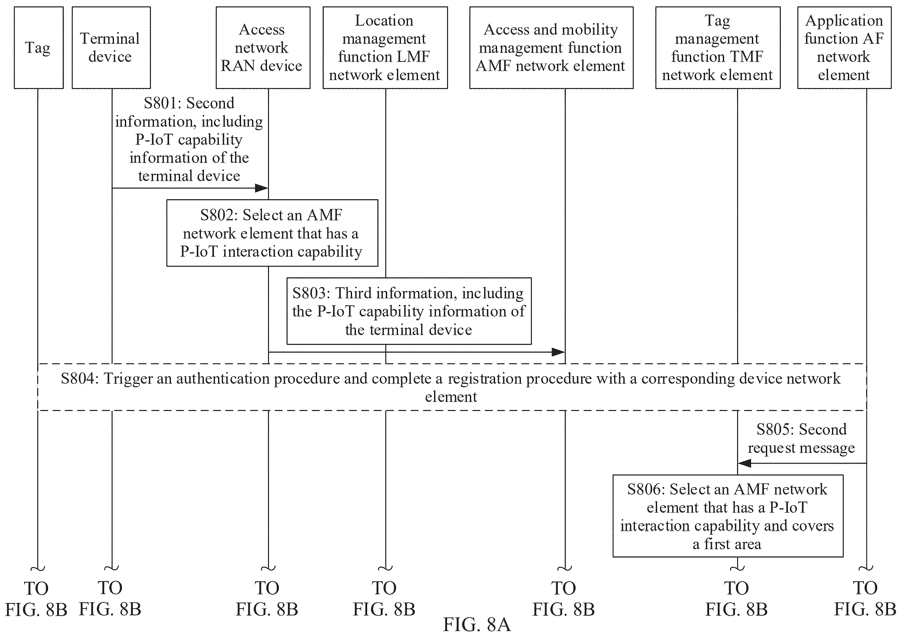

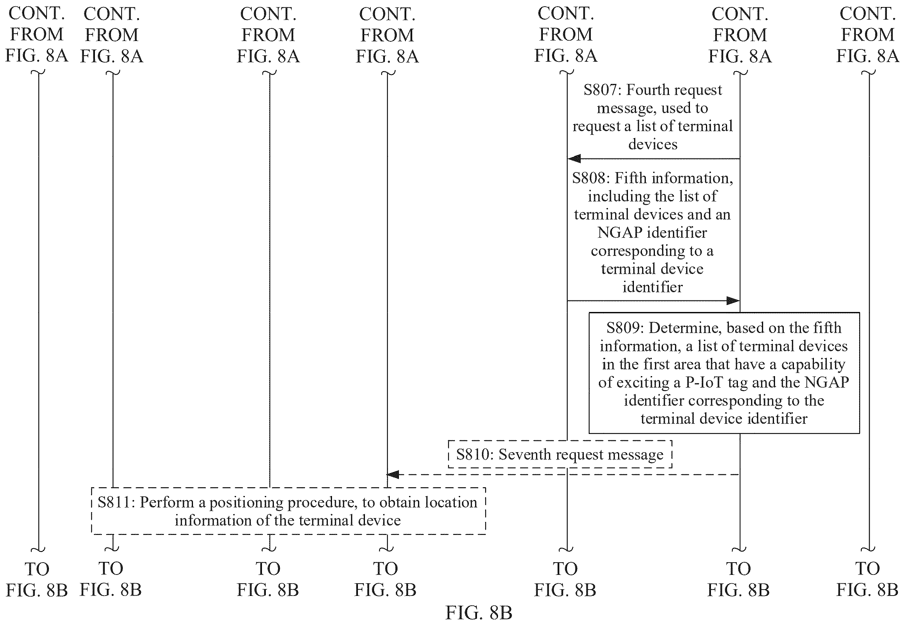

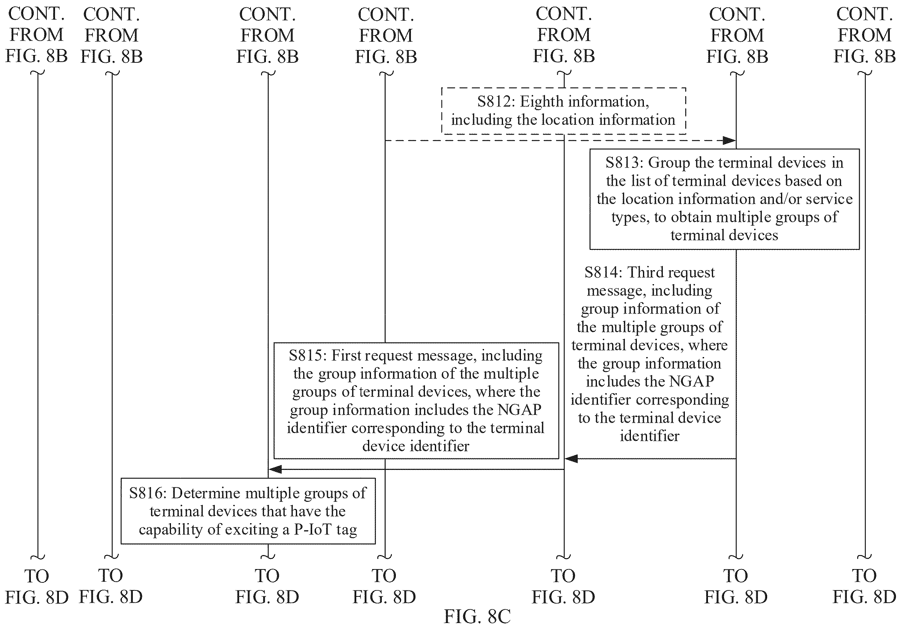

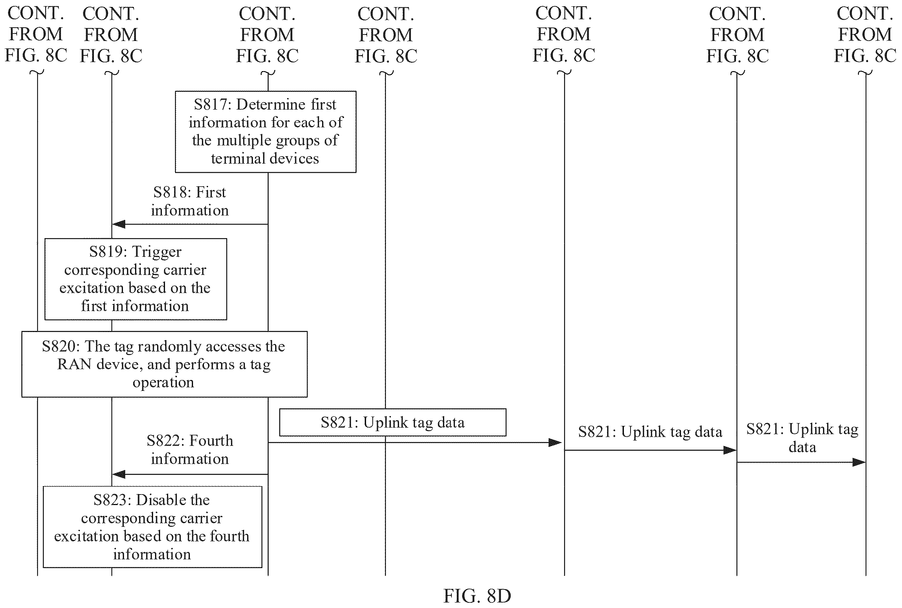

Refer to FIG. 8A to FIG. 8D. FIG. 8A to FIG. 8D are a schematic flowchart of another communication method. Compared with the communication method in FIG. 5A to FIG. 5D, in the communication method in FIG. 8A to FIG. 8D, fifth information further includes an NGAP identifier corresponding to a terminal device identifier. In this case, after a TMF network element groups terminal devices in a list of terminal devices to obtain multiple groups of terminal devices, group information that is of the multiple groups of terminal devices and that is sent by the TMF network element to an AMF network element also includes the NGAP identifier corresponding to the terminal device identifier. In this way, the AMF network element may directly transparently transmit the group information to a RAN device without performing identifier conversion. As shown in FIG. 8A to FIG. 8D, the communication method may include but is not limited to the following steps.

S801: A terminal device sends second information to an accessed RAN device, and correspondingly, the RAN device receives the second information, where the second information includes P-IoT capability information of the terminal device.

S802: The RAN device selects an AMF network element that has a P-IoT interaction capability.

S803: The RAN device sends third information to the AMF network element, and correspondingly, the AMF network element receives the third information from the RAN device. The third information includes the P-IoT capability information of the terminal device accessing the RAN device.

S804: Trigger an authentication procedure and complete a registration procedure with a corresponding device network element.

It should be noted that for related descriptions of step S801 to step S804, refer to step S501 to step S504 in FIG. 5A to FIG. 5D. Details are not described again.

S805: An AF network element sends a second request message to the TMF network element, and correspondingly, the TMF network element receives the second request message from the AF network element, where the second request message is used to request to perform an operation on a tag in a first area.

It should be noted that for related descriptions, refer to step S301 in FIG. 3A to FIG. 3C. Details are not described again.

S806: The TMF network element selects an AMF network element that has a P-IoT interaction capability and covers the first area.

S807: The TMF network element sends a fourth request message to the AMF network element, and correspondingly, the AMF network element receives the fourth request message from the TMF network element, where the fourth request message is used to request a list of terminal devices in the first area that have a capability of exciting a P-IoT tag.

It should be noted that for related descriptions of step S806 and step S807, refer to step S506 and step S507 in FIG. 5A to FIG. 5D. Details are not described again.

S808: The AMF network element sends fifth information to the TMF network element, and correspondingly, the TMF network element receives the fifth information from the AMF network element, where the fifth information includes the list of terminal devices in the first area that have the capability of exciting a P-IoT tag, and the fifth information further includes an NGAP identifier corresponding to a terminal device identifier.

S809: The TMF network element determines, based on the fifth information, the list of terminal devices in the first area that have the capability of exciting a P-IoT tag and an NGAP identifier corresponding to each terminal device identifier.

S810: The TMF network element sends a seventh request message to an LMF network element, and correspondingly, the LMF network element receives the seventh request message from the TMF network element, where the seventh request message includes the list of terminal devices and an LCS association identifier corresponding to each terminal device in the list of terminal devices.

S811: The LMF network element performs a positioning procedure, to obtain location information of the terminal device.

S812: The LMF network element sends eighth information to the TMF network element, and correspondingly, the TMF network element receives the eighth information from the LMF network element, where the eighth information includes the location information of each terminal device in the list of terminal devices.

S813: The TMF network element groups the terminal devices in the list of terminal devices based on the location information and/or a service type, to obtain multiple groups of terminal devices.

It should be noted that for related descriptions of step S810 to step S813, refer to step S510 to step S513 in FIG. 5A to FIG. 5D. Details are not described again.

S814: The TMF network element sends a third request message to the AMF network element, and correspondingly, the AMF network element receives the third request message from the TMF network element. The third request message is used to request to perform an operation on the tag in the first area. The third request message includes group information of multiple groups of terminal devices in the first area that have the capability of exciting a P-IoT tag, and the group information further includes the NGAP identifier corresponding to each terminal device identifier.

S815: The AMF network element sends a first request message to the RAN device, where first request message includes the group information of the multiple groups of terminal devices, and the first request message is used to request the RAN device to trigger a tag to perform random access.

S816: The RAN device determines, based on the group information of the multiple groups of terminal devices included in the first request message, the multiple groups of terminal devices that have the capability of exciting a P-IoT tag.

S817: The RAN device determines first information for each of the multiple groups of terminal devices, where the first information indicates a terminal device in the corresponding group of terminal devices to trigger corresponding carrier excitation, and the carrier excitation is used to excite a P-IoT tag.

S818: The RAN device sends the corresponding first information to each of the multiple groups of terminal devices, and correspondingly, the terminal device receives the first information from the accessed RAN device.

S819: The terminal device triggers the corresponding carrier excitation based on the first information.

S820: The tag randomly accesses the RAN device, and performs a tag operation.

S821: The RAN device sends uplink tag data to the AMF network element; when receiving the uplink tag data from the RAN device, the AMF network element sends the uplink tag data to the TMF network element; and when receiving the uplink tag data from the AMF network element, the TMF network element sends the uplink tag data to the AF network element.

S822: The RAN device sends corresponding fourth information to each of the multiple groups of terminal devices, and correspondingly, the terminal device receives the fourth information from the accessed RAN device. The fourth information indicates the terminal device in the corresponding group of terminal devices to disable the corresponding carrier excitation.

S823: The terminal device disables the corresponding carrier excitation based on the fourth information.

It should be noted that for related embodiments of step S815 to step S823, refer to step S515 to step S523 in FIG. 5A to FIG. 5D. Details are not described again.

It can be learned that in this embodiment of this application, the fifth information further includes the NGAP identifier corresponding to the terminal device identifier. In this case, after the TMF network element groups the terminal devices in the list of terminal devices to obtain the multiple groups of terminal devices, the group information of the multiple groups of terminal devices that is sent by the TMF network element to the AMF network element also includes the NGAP identifier corresponding to the terminal device identifier. In this case, the AMF network element may directly transparently transmit the group information to the RAN device without performing identifier conversion, so that the AMF network element can transparently transmit the group information from the TMF network element, thereby effectively reducing workload of the AMF network element. In addition, the AMF can be prevented from sensing information related to the tag operation.

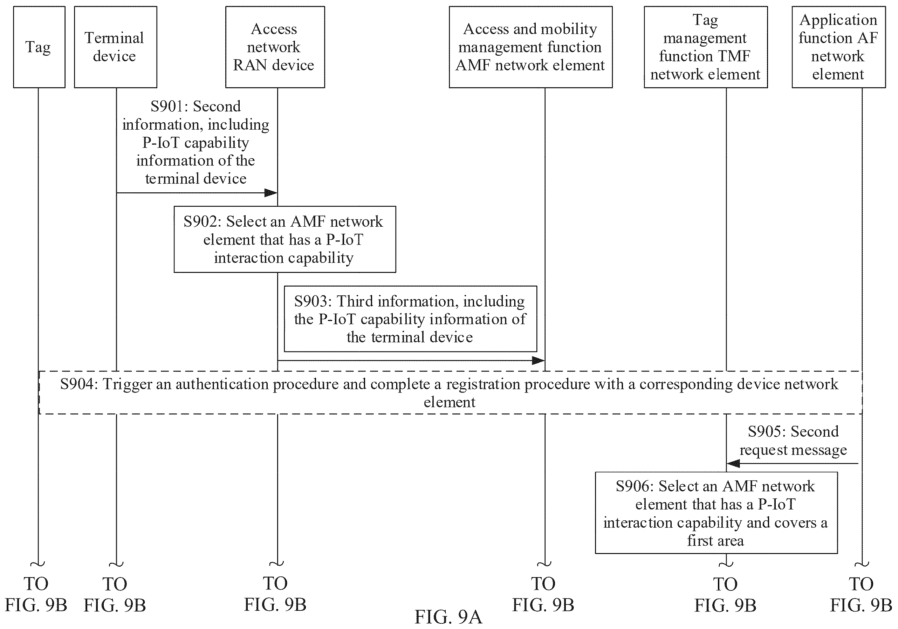

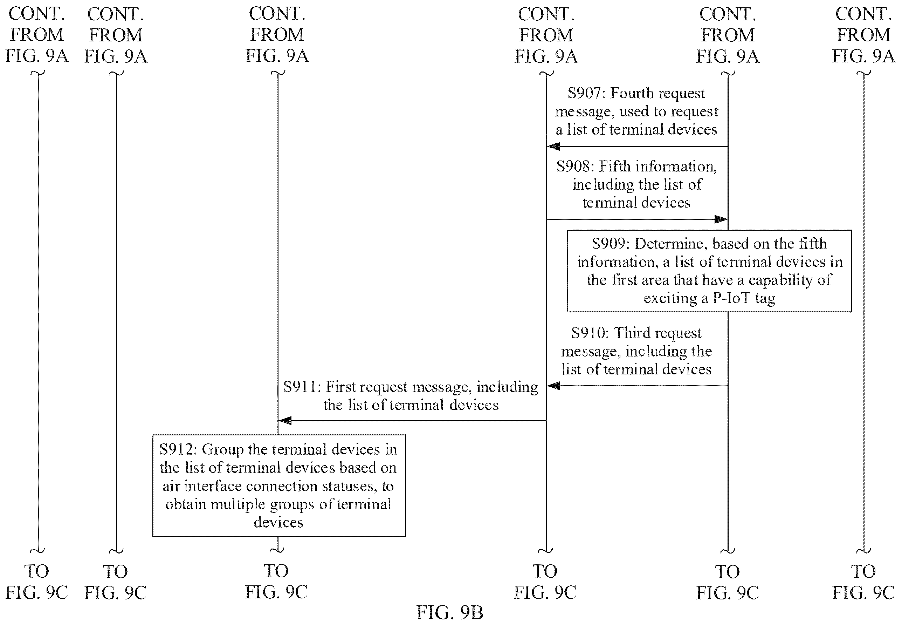

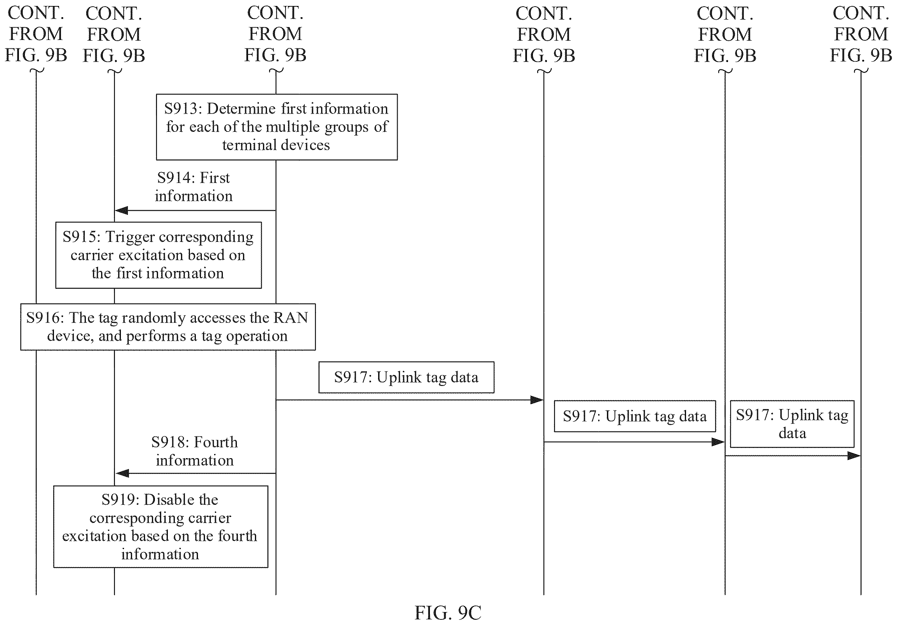

Refer to FIG. 9A to FIG. 9C. FIG. 9A to FIG. 9C are a schematic flowchart of another communication method. Compared with the communication method in FIG. 5A to FIG. 5D, in the communication method in FIG. 9A to FIG. 9C, a TMF network element determines only a list of terminal devices in a first area that have a capability of exciting a P-IoT tag. When the TMF network element sends the list of terminal devices to a RAN device, the RAN device may group the terminal devices in the list of terminal devices based on air interface connection statuses to obtain multiple groups of terminal devices. As shown in FIG. 9A to FIG. 9C, the communication method may include but is not limited to the following steps.

S901: A terminal device sends second information to an accessed RAN device, and correspondingly, the RAN device receives the second information, where the second information includes P-IoT capability information of the terminal device.

S902: The RAN device selects an AMF network element that has a P-IoT interaction capability.

S903: The RAN device sends third information to the AMF network element, and correspondingly, the AMF network element receives the third information from the RAN device. The third information includes the P-IoT capability information of the terminal device accessing the RAN device.

S904: Trigger an authentication procedure and complete a registration procedure with a corresponding device network element.

It should be noted that for related descriptions of step S901 to step S904, refer to step S501 to step S504 in FIG. 5A to FIG. 5D. Details are not described again.

S905: An AF network element sends a second request message to the TMF network element, and correspondingly, the TMF network element receives the second request message from the AF network element, where the second request message is used to request to perform an operation on a tag in a first area.

It should be noted that for related descriptions, refer to step S301 in FIG. 3A to FIG. 3C. Details are not described again.

S906: The TMF network element selects an AMF network element that has a P-IoT interaction capability and covers the first area.

S907: The TMF network element sends a fourth request message to the AMF network element, and correspondingly, the AMF network element receives the fourth request message from the TMF network element, where the fourth request message is used to request a list of terminal devices in the first area that have a capability of exciting a P-IoT tag.

S908: The AMF network element sends fifth information to the TMF network element, and correspondingly, the TMF network element receives the fifth information from the AMF network element, where the fifth information includes the list of terminal devices in the first area that have the capability of exciting a P-IoT tag.

S909: The TMF network element determines, based on the fifth information, the list of terminal devices in the first area that have the capability of exciting a P-IoT tag.

It should be noted that for related descriptions of step S906 to step S909, refer to step S506 to step S509 in FIG. 5A to FIG. 5D. Details are not described again.

S910: The TMF network element sends a third request message to the AMF network element, and correspondingly, the AMF network element receives the third request message from the TMF network element. The third request message is used to request to perform an operation on the tag in the first area, and the third request message includes the list of terminal devices.

It can be learned that the TMF network element does not need to group the terminal devices in the list of terminal devices or directly group all terminal devices in the list of terminal devices into one group, and may directly send the list of terminal devices to the AMF network element, so that the AMF network element sends the list of terminal devices to the RAN device.

S911: The AMF network element sends a first request message to the RAN device, and correspondingly, the RAN device receives the first request message from the AMF network element, where the first request message includes the list of terminal devices, and the first request message is used to request the RAN device to trigger a tag to perform random access.

S912: The RAN device groups the terminal devices in the list of terminal devices based on air interface connection statuses, to obtain multiple groups of terminal devices.

Terminal devices in a same group among the multiple groups of terminal devices have a same air interface connection status, that is, terminal devices in different groups among the multiple groups of terminal devices have different air interface connection statuses. The air interface connection status indicates an air interface connection situation of the terminal device. For example, the air interface connection status may include beam distribution.

S913: The RAN device determines first information for each of the multiple groups of terminal devices, where the first information indicates a terminal device in the corresponding group of terminal devices to trigger corresponding carrier excitation, and the carrier excitation is used to excite a P-IoT tag.

S914: The RAN device sends the corresponding first information to each of the multiple groups of terminal devices, and correspondingly, the terminal device receives the first information from the accessed RAN device.

S915: The terminal device triggers the corresponding carrier excitation based on the first information.

S916: The tag randomly accesses the RAN device, and performs a tag operation.

S917: The RAN device sends uplink tag data to the AMF network element; when receiving the uplink tag data from the RAN device, the AMF network element sends the uplink tag data to the TMF network element; and when receiving the uplink tag data from the AMF network element, the TMF network element sends the uplink tag data to the AF network element.

S918: The RAN device sends corresponding fourth information to each of the multiple groups of terminal devices, and correspondingly, the terminal device receives the fourth information from the accessed RAN device. The fourth information indicates the terminal device in the corresponding group of terminal devices to disable the corresponding carrier excitation.

S919: The terminal device disables the corresponding carrier excitation based on the fourth information.

It should be noted that for related embodiments of step S913 to step S919, refer to step S517 to step S523 in FIG. 5A to FIG. 5D. Details are not described again.

It should be noted that after the TMF network element obtains the list of terminal devices in the first area that have the capability of exciting a P-IoT tag, because the TMF network element does not need to group the terminal devices in the list of terminal devices based on the location information, a positioning request for the terminal device does not need to be initiated or location information of the terminal device does not need to be obtained. In addition, the fifth information provided by the AMF network element for the TMF network element may not include an LCS association identifier corresponding to each terminal device.

It can be learned that in this embodiment of this application, the TMF network element may determine the list of terminal devices that have the capability of exciting a P-IoT tag, and does not need to group the terminal devices in the list of terminal devices or group all terminal devices in the list of terminal devices into one group. When the TMF network element sends the list of terminal devices to the RAN device, the RAN device may group the terminal devices in the list of terminal devices based on the air interface connection statuses to obtain the multiple groups of terminal devices, and indicate, for different groups of terminal devices, different carriers used to excite a P-IoT tag, that is, indicate, for groups of terminal devices having different air interface connection statuses, different carriers for exciting a P-IoT tag. Because the RAN device groups the terminal devices with reference to the air interface connection status, efficient use of air interface resources can be effectively ensured.

To implement functions in the foregoing method provided in embodiments of this application, the RAN device, the TMF network element, or the AMF network element may include a hardware structure and/or a software module, and the foregoing functions are implemented in a form of a hardware structure, a software module, or a combination of a hardware structure and a software module. Whether a function in the foregoing functions is performed in a manner of a hardware structure, a software module, or a hardware structure and a software module depends on specific applications and design constraints of the technical solutions.

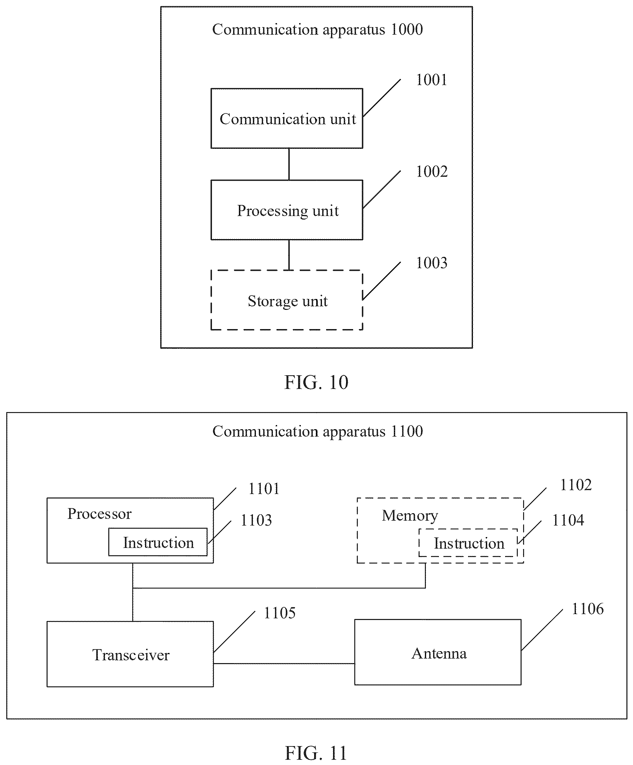

As shown in FIG. 10, an embodiment of this application provides a communication apparatus 1000. The communication apparatus 1000 may include a communication unit 1001 and a processing unit 1002. The processing unit 1002 is configured to control the communication unit 1001 to perform data/signaling receiving and sending. Optionally, the communication apparatus 1000 may further include a storage unit 1003.

In a possible design, the processing unit 1002 is configured to determine multiple groups of terminal devices having a capability of exciting a P-IoT tag.

The processing unit 1002 is further configured to determine first information for each of the multiple groups of terminal devices, where the first information indicates a terminal device in the corresponding group of terminal devices to trigger corresponding carrier excitation, and the carrier excitation is used to excite a P-IoT tag.

The communication unit 1001 is configured to send the corresponding first information to each of the multiple groups of terminal devices.

In this possible design, the communication apparatus 1000 may include a RAN device or a component (for example, an integrated circuit or a chip) in the RAN device.

In an optional implementation, that the processing unit 1002 is configured to determine the multiple groups of terminal devices having the capability of exciting a P-IoT tag includes:
the communication unit 1001 is configured to receive a first request message, where the first request message is used to request a RAN device to trigger a tag to perform random access, and the first request message includes group information of the multiple groups of terminal devices having the capability of exciting a P-IoT tag.

In an optional implementation, that the processing unit 1002 is configured to determine the multiple groups of terminal devices having the capability of exciting a P-IoT tag includes:
the communication unit 1001 is configured to receive a first request message, where the first request message is used to request a RAN device to trigger a tag to perform random access, and the first request message includes a list of terminal devices having the capability of exciting a P-IoT tag; and
the processing unit 1002 is configured to group the terminal devices in the list of terminal devices based on air interface connection statuses, to obtain the multiple groups of terminal devices.

In an optional implementation, before the communication unit 1001 is configured to receive the first request message, the following is further included:
the communication unit 1001 is configured to receive a second request message, where the second request message is used to request to perform an operation on a tag in a first area;
the processing unit 1002 is configured to determine a list of terminal devices or multiple groups of terminal devices in the first area that have the capability of exciting a P-IoT tag;
the communication unit 1001 is configured to send a third request message, where the third request message is used to request to perform an operation on the tag in the first area, and the third request message includes the list of terminal devices or group information of the multiple groups of terminal devices in the first area that have the capability of exciting a P-IoT tag; and
the communication unit 1001 is configured to send the first request message, where the first request message includes the list of terminal devices or the group information of the multiple groups of terminal devices.

In this optional implementation, the communication apparatus 1000 may further include a TMF network element and an AMF network element. Optionally, the TMF network element may be a component in the TMF network element. Optionally, the AMF network element may be a component in the AMF network element.

In an optional implementation, before the communication unit 1001 is configured to receive the first request message, the following is further included:
the communication unit 1001 is configured to receive second information of a terminal device accessing the communication apparatus 1000, where the second information includes P-IoT capability information of the terminal device, and the P-IoT capability information indicates that the terminal device has the capability of exciting a P-IoT tag;
the processing unit 1002 is configured to select an AMF network element having a P-IoT interaction capability; and
the communication unit 1001 is configured to send third information, where the third information includes the P-IoT capability information of the terminal device accessing the communication apparatus 1000.

In an optional implementation, after the communication unit 1001 is configured to send the corresponding first information to each of the multiple groups of terminal devices, the following is further included:
the communication unit 1001 is configured to send fourth information to each of the multiple groups of terminal devices, where the fourth information indicates the terminal device in the corresponding group of terminal devices to disable the corresponding carrier excitation.

In another possible design, the communication unit 1001 is configured to receive a second request message, where the second request message is used to request to perform an operation on a tag in a first area;
the processing unit 1002 is configured to determine multiple groups of terminal devices in the first area that have the capability of exciting a P-IoT tag; and
the communication unit 1001 is further configured to send a third request message, where the third request message is used to request to perform an operation on the tag in the first area, the third request message includes group information of the multiple groups of terminal devices in the first area that have the capability of exciting a P-IoT tag, and the group information is used to determine corresponding carrier excitation.

In this possible design, the communication apparatus 1000 may include a TMF network element or a component (for example, an integrated circuit or a chip) in the TMF network element.

In an optional implementation, that the processing unit 1002 is configured to determine the multiple groups of terminal devices in the first area that have the capability of exciting a P-IoT tag includes:
the processing unit 1002 is configured to determine a list of terminal devices in the first area that have the capability of exciting a P-IoT tag; and
the processing unit 1002 is configured to group the terminal devices in the list of terminal devices based on location information and/or service types, to obtain multiple groups of terminal devices.

In an optional implementation, that the processing unit 1002 is configured to determine the list of terminal devices in the first area that have the capability of exciting a P-IoT tag includes:
the processing unit 1002 is configured to select an AMF network element that has a P-IoT interaction capability and covers the first area;
the communication unit 1001 is configured to send a fourth request message, where the fourth request message is used to request the list of terminal devices in the first area that have the capability of exciting a P-IoT tag; and
the communication unit 1001 is configured to receive fifth information, where the fifth information includes the list of terminal devices in the first area that have the capability of exciting a P-IoT tag.

In an optional implementation, that the processing unit 1002 is configured to determine the list of terminal devices in the first area that have the capability of exciting a P-IoT tag includes:
the processing unit 1002 is configured to select an AMF network element that has a P-IoT interaction capability and covers the first area;
the communication unit 1001 is configured to send a fifth request message, where the fifth request message is used to request a list of terminal devices in the first area;
the communication unit 1001 is configured to receive sixth information, where the sixth information includes the list of terminal devices in the first area;
the communication unit 1001 is configured to send a sixth request message to a UDM network element, where the sixth request message includes the list of terminal devices in the first area, and the sixth request message is used to request P-IoT capability information of the terminal device in the first area;
the communication unit 1001 is configured to receive seventh information from the UDM network element, where the seventh information includes the P-IoT capability information of the terminal device in the first area; and
the processing unit 1002 is configured to determine, based on the seventh information, the list of terminal devices in the first area that have the capability of exciting a P-IoT tag.

In another possible design, the communication unit 1001 is configured to receive a second request message, where the second request message is used to request to perform an operation on a tag in a first area;
the processing unit 1002 is configured to determine a list of terminal devices in the first area that have the capability of exciting a P-IoT tag; and
the communication unit 1001 is further configured to send a third request message, where the third request message is used to request to perform an operation on the tag in the first area, the third request message includes the list of terminal devices in the first area that have the capability of exciting a P-IoT tag, the list of terminal devices includes one or more terminal device identifiers, and a terminal device identified by the terminal device identifier is configured to excite a P-IoT tag.

In this possible design, the communication apparatus 1000 may include a TMF network element or a component (for example, an integrated circuit or a chip) in the TMF network element.

In an optional implementation, that the processing unit 1002 is configured to determine the list of terminal devices in the first area that have the capability of exciting a P-IoT tag includes:
the processing unit 1002 is configured to select an AMF network element that has a P-IoT interaction capability and covers the first area;
the communication unit 1001 is configured to send a fourth request message, where the fourth request message is used to request the list of terminal devices in the first area that have the capability of exciting a P-IoT tag; and
the communication unit 1001 is configured to receive fifth information, where the fifth information includes the list of terminal devices in the first area that have the capability of exciting a P-IoT tag.

In an optional implementation, that the processing unit 1002 is configured to determine the list of terminal devices in the first area that have the capability of exciting a P-IoT tag includes:
the processing unit 1002 is configured to select an AMF network element that has a P-IoT interaction capability and covers the first area;
the communication unit 1001 is configured to send a fifth request message, where the fifth request message is used to request a list of terminal devices in the first area;
the communication unit 1001 is configured to receive sixth information, where the sixth information includes the list of terminal devices in the first area;
the communication unit 1001 is configured to send a sixth request message to a UDM network element, where the sixth request message includes the list of terminal devices in the first area, and the sixth request message is used to request P-IoT capability information of the terminal device in the first area;
the communication unit 1001 is configured to receive seventh information from the UDM network element, where the seventh information includes the P-IoT capability information of the terminal device in the first area; and
the processing unit 1002 is configured to determine, based on the seventh information, the list of terminal devices in the first area that have the capability of exciting a P-IoT tag.

This embodiment of this application and the foregoing communication method are based on a same concept, and bring same technical effects. For a specific principle, refer to the descriptions of the foregoing embodiments. Details are not described again.

An embodiment of this application further provides a communication apparatus 1100, as shown in FIG. 11. The communication apparatus 1100 may be configured to implement the methods described in the foregoing method embodiments. For details, refer to the descriptions in the foregoing method embodiments.

The communication apparatus 1100 may include one or more processors 1101. The processor may be configured to implement some or all functions of the RAN device, the TMF network element, and/or the AMF network element by using a logic circuit or by running a computer program. The processor 1101 may be a general-purpose processor, a dedicated processor, or the like. For example, the processor may be a baseband processor, a digital signal processor, an application-specific integrated circuit, a field programmable gate array or another programmable logic device, a discrete gate or a transistor logic device, a discrete hardware component, or a central processing unit (Central Processing Unit, CPU). The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

Optionally, the communication apparatus 1100 may include one or more memories 1102. The memory may store instructions 1104. The instructions may be run on the processor 1101, so that the communication apparatus 1100 performs the method described in the foregoing method embodiments. Optionally, the memory 1102 may further store data. The processor 1101 and the memory 1102 may be separately disposed, or may be integrated together.

The memory 1102 may include but is not limited to a nonvolatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM, a compact disc read-only memory (compact disc read-only memory, CD-ROM), or the like.

Optionally, the communication apparatus 1100 may further include a transceiver 1105 and an antenna 1106. The transceiver 1105 may be referred to as a transceiver unit, a transceiver machine, a transceiver circuit, or the like, and is configured to implement receiving and sending functions. The transceiver 1105 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

In a possible design, the processor 1101 is configured to determine multiple groups of terminal devices having a capability of exciting a P-IoT tag.

The processor 1101 is further configured to determine first information for each of the multiple groups of terminal devices, where the first information indicates a terminal device in the corresponding group of terminal devices to trigger corresponding carrier excitation, and the carrier excitation is used to excite a P-IoT tag.

The transceiver 1105 is configured to send the corresponding first information to each of the multiple groups of terminal devices.

In this possible design, the communication apparatus 1100 may include a RAN device or a component (for example, an integrated circuit or a chip) in the RAN device.

In an optional implementation, that the processor 1101 is configured to determine the multiple groups of terminal devices having the capability of exciting a P-IoT tag includes:
the transceiver 1105 is configured to receive a first request message, where the first request message is used to request a RAN device to trigger a tag to perform random access, and the first request message includes group information of the multiple groups of terminal devices having the capability of exciting a P-IoT tag.

In an optional implementation, that the processor 1101 is configured to determine the multiple groups of terminal devices having the capability of exciting a P-IoT tag includes:
the transceiver 1105 is configured to receive a first request message, where the first request message is used to request a RAN device to trigger a tag to perform random access, and the first request message includes a list of terminal devices having the capability of exciting a P-IoT tag; and
the processor 1101 is configured to group the terminal devices in the list of terminal devices based on air interface connection statuses, to obtain the multiple groups of terminal devices.

In an optional implementation, before the transceiver 1105 is configured to receive the first request message, the following is further included:
the transceiver 1105 is configured to receive a second request message, where the second request message is used to request to perform an operation on a tag in a first area;
the processor 1101 is configured to determine a list of terminal devices or multiple groups of terminal devices in the first area that have the capability of exciting a P-IoT tag;
the transceiver 1105 is configured to send a third request message, where the third request message is used to request to perform an operation on the tag in the first area, and the third request message includes the list of terminal devices or group information of the multiple groups of terminal devices in the first area that have the capability of exciting a P-IoT tag; and
the transceiver 1105 is configured to send the first request message, where the first request message includes the list of terminal devices or the group information of the multiple groups of terminal devices.

In this optional implementation, the communication apparatus 1100 may further include a TMF network element and an AMF network element. Optionally, the TMF network element may be a component in the TMF network element. Optionally, the AMF network element may be a component in the AMF network element.

In an optional implementation, before the transceiver 1105 is configured to receive the first request message, the following is further included:
the transceiver 1105 is configured to receive second information of a terminal device accessing the communication apparatus 1100, where the second information includes P-IoT capability information of the terminal device, and the P-IoT capability information indicates that the terminal device has the capability of exciting a P-IoT tag;
the processor 1101 is configured to select an AMF network element having a P-IoT interaction capability; and
the transceiver 1105 is configured to send third information, where the third information includes the P-IoT capability information of the terminal device accessing the communication apparatus 1100.

In an optional implementation, after the transceiver 1105 is configured to send the corresponding first information to each of the multiple groups of terminal devices, the following is further included:
the transceiver 1105 is configured to send fourth information to each of the multiple groups of terminal devices, where the fourth information indicates the terminal device in the corresponding group of terminal devices to disable the corresponding carrier excitation.

In another possible design, the transceiver 1105 is configured to receive a second request message, where the second request message is used to request to perform an operation on a tag in a first area;
the processor 1101 is configured to determine multiple groups of terminal devices in the first area that have the capability of exciting a P-IoT tag; and
the transceiver 1105 is further configured to send a third request message, where the third request message is used to request to perform an operation on the tag in the first area, the third request message includes group information of the multiple groups of terminal devices in the first area that have the capability of exciting a P-IoT tag, and the group information is used to determine corresponding carrier excitation.

In this possible design, the communication apparatus 1100 may include a TMF network element or a component (for example, an integrated circuit or a chip) in the TMF network element.

In an optional implementation, that the processor 1101 is configured to determine the multiple groups of terminal devices in the first area that have the capability of exciting a P-IoT tag includes:
the processor 1101 is configured to determine a list of terminal devices in the first area that have the capability of exciting a P-IoT tag; and
the processor 1101 is configured to group the terminal devices in the list of terminal devices based on location information and/or service types, to obtain multiple groups of terminal devices.

In an optional implementation, that the processor 1101 is configured to determine the list of terminal devices in the first area that have the capability of exciting a P-IoT tag includes:
the processor 1101 is configured to select an AMF network element that has a P-IoT interaction capability and covers the first area;
the transceiver 1105 is configured to send a fourth request message, where the fourth request message is used to request the list of terminal devices in the first area that have the capability of exciting a P-IoT tag; and
the transceiver 1105 is configured to receive fifth information, where the fifth information includes the list of terminal devices in the first area that have the capability of exciting a P-IoT tag.

In an optional implementation, that the processor 1101 is configured to determine the list of terminal devices in the first area that have the capability of exciting a P-IoT tag includes:
the processor 1101 is configured to select an AMF network element that has a P-IoT interaction capability and covers the first area;
the transceiver 1105 is configured to send a fifth request message, where the fifth request message is used to request a list of terminal devices in the first area;
the transceiver 1105 is configured to receive sixth information, where the sixth information includes the list of terminal devices in the first area;
the transceiver 1105 is configured to send a sixth request message to a UDM network element, where the sixth request message includes the list of terminal devices in the first area, and the sixth request message is used to request P-IoT capability information of the terminal device in the first area;
the transceiver 1105 is configured to receive seventh information from the UDM network element, where the seventh information includes the P-IoT capability information of the terminal device in the first area; and
the processor 1101 is configured to determine, based on the seventh information, the list of terminal devices in the first area that have the capability of exciting a P-IoT tag.

In another possible design, the transceiver 1105 is configured to receive a second request message, where the second request message is used to request to perform an operation on a tag in a first area;
the processor 1101 is configured to determine a list of terminal devices in the first area that have the capability of exciting a P-IoT tag; and
the transceiver 1105 is further configured to send a third request message, where the third request message is used to request to perform an operation on the tag in the first area, the third request message includes the list of terminal devices in the first area that have the capability of exciting a P-IoT tag, the list of terminal devices includes one or more terminal device identifiers, and a terminal device identified by the terminal device identifier is configured to excite a P-IoT tag.

In this possible design, the communication apparatus 1000 may include a TMF network element or a component (for example, an integrated circuit or a chip) in the TMF network element.

In an optional implementation, that the processor 1101 is configured to determine the list of terminal devices in the first area that have the capability of exciting a P-IoT tag includes:
the processor 1101 is configured to select an AMF network element that has a P-IoT interaction capability and covers the first area;
the transceiver 1105 is configured to send a fourth request message, where the fourth request message is used to request the list of terminal devices in the first area that have the capability of exciting a P-IoT tag; and
the transceiver 1105 is configured to receive fifth information, where the fifth information includes the list of terminal devices in the first area that have the capability of exciting a P-IoT tag.

In an optional implementation, that the processor 1101 is configured to determine the list of terminal devices in the first area that have the capability of exciting a P-IoT tag includes:
the processor 1101 is configured to select an AMF network element that has a P-IoT interaction capability and covers the first area;
the transceiver 1105 is configured to send a fifth request message, where the fifth request message is used to request a list of terminal devices in the first area;
the transceiver 1105 is configured to receive sixth information, where the sixth information includes the list of terminal devices in the first area;
the transceiver 1105 is configured to send a sixth request message to a UDM network element, where the sixth request message includes the list of terminal devices in the first area, and the sixth request message is used to request P-IoT capability information of the terminal device in the first area;
the transceiver 1105 is configured to receive seventh information from the UDM network element, where the seventh information includes the P-IoT capability information of the terminal device in the first area; and
the processor 1101 is configured to determine, based on the seventh information, the list of terminal devices in the first area that have the capability of exciting a P-IoT tag.

In another possible design, the processor 1101 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In another possible design, optionally, the processor 1101 may store instructions 1103, and the instructions 1103 are run on the processor 1101, to enable the communication apparatus 1100 to perform the method described in the foregoing method embodiments. The instructions 1103 may be fixed in the processor 1101. In this case, the processor 1101 may be implemented by hardware.

In another possible design, the communication apparatus 1100 may include a circuit. The circuit may implement the sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC process technologies, for example, a complementary metal oxide semiconductor (complementary metal oxide semiconductor, CMOS), an N-channel metal oxide semiconductor (nMetal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

In embodiments of this application, the communication apparatus 1100 may perform implementations of the communication apparatus 1000. A person skilled in the art may further understand that various illustrative logical blocks (illustrative logical block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the protection scope of embodiments of this application.

This embodiment of this application and the foregoing communication method are based on a same concept, and bring same technical effects. For a specific principle, refer to the descriptions in the foregoing communication method. Details are not described again.

A person skilled in the art may further understand that various illustrative logical blocks (illustrative logical block) and steps (step) that are listed in embodiments of this application may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the protection scope of embodiments of this application.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
determining, by an access network device, multiple groups of terminal devices having a capability of exciting a passive internet of things tag;
determining, by the access network device, first information for each of the multiple groups of terminal devices, wherein the first information indicates a terminal device in the corresponding group of terminal devices to trigger corresponding carrier excitation, and the carrier excitation is used to excite a passive internet of things tag; and
sending, by the access network device, the corresponding first information to each of the multiple groups of terminal devices.

2. The method according to claim 1, wherein determining, by the access network device, the multiple groups of terminal devices having the capability of exciting a passive internet of things tag comprises:
receiving, by the access network device, a first request message from an access and mobility management network element, wherein the first request message is used to request the access network device to trigger a tag to perform random access, and the first request message comprises group information of the multiple groups of terminal devices having the capability of exciting a passive internet of things tag.

3. The method according to claim 1, wherein determining, by the access network device, the multiple groups of terminal devices having the capability of exciting a passive internet of things tag comprises:
receiving, by the access network device, a first request message from an access and mobility management network element, wherein the first request message is used to request the access network device to trigger a tag to perform random access, and the first request message comprises a list of terminal devices having the capability of exciting a passive internet of things tag; and
grouping, by the access network device, the terminal devices in the list of terminal devices based on air interface connection statuses, to obtain the multiple groups of terminal devices.

4. The method according to claim 2 or 3, wherein before receiving, by the access network device, the first request message from the access and mobility management network element, the method further comprises:
receiving, by a tag management function network element, a second request message from an application function network element, wherein the second request message is used to request to perform an operation on a tag in a first area;
determining, by the tag management function network element, a list of terminal devices or multiple groups of terminal devices in the first area that have the capability of exciting a passive internet of things tag;
sending, by the tag management function network element, a third request message to the access and mobility management network element, wherein the third request message is used to request to perform an operation on the tag in the first area, and the third request message comprises the list of terminal devices or group information of the multiple groups of terminal devices in the first area that have the capability of exciting a passive internet of things tag; and
sending, by the access and mobility management network element, the first request message to the access network device, wherein the first request message comprises the list of terminal devices or the group information of the multiple groups of terminal devices.

5. The method according to any one of claims 2 to 4, wherein before receiving, by the access network device, the first request message from the access and mobility management network element, the method further comprises:
receiving, by the access network device, second information of a terminal device accessing the access network device, wherein the second information comprises passive internet of things capability information of the terminal device, and the passive internet of things capability information indicates that the terminal device has the capability of exciting a passive internet of things tag;
selecting, by the access network device, an access and mobility management network element having a passive internet of things interaction capability; and
sending, by the access network device, third information to the access and mobility management network element, wherein the third information comprises the passive internet of things capability information of the terminal device accessing the access network device.

6. The method according to any one of claims 1 to 5, wherein after sending, by the access network device, the corresponding first information to each of the multiple groups of terminal devices, the method further comprises:
sending, by the access network device, fourth information to each of the multiple groups of terminal devices, wherein the fourth information indicates the terminal device in the corresponding group of terminal devices to disable the corresponding carrier excitation.

7. A communication method, wherein the method comprises:
receiving, by a tag management function network element, a second request message from an application function network element, wherein the second request message is used to request to perform an operation on a tag in a first area;
determining, by the tag management function network element, multiple groups of terminal devices in the first area that have a capability of exciting a passive internet of things tag; and
sending, by the tag management function network element, a third request message to an access and mobility management network element, wherein the third request message is used to request to perform an operation on the tag in the first area, the third request message comprises group information of the multiple groups of terminal devices in the first area that have the capability of exciting a passive internet of things tag, and the group information is used to determine corresponding carrier excitation.

8. The method according to claim 7, wherein determining, by the tag management function network element, the multiple groups of terminal devices in the first area that have the capability of exciting a passive internet of things tag comprises:
determining, by the tag management function network element, a list of terminal devices in the first area that have the capability of exciting a passive internet of things tag; and
grouping, by the tag management function network element, the terminal devices in the list of terminal devices based on location information and/or service types, to obtain the multiple groups of terminal devices.

9. The method according to claim 7 or 8, wherein determining, by the tag management function network element, the list of terminal devices in the first area that have the capability of exciting a passive internet of things tag comprises:
selecting, by the tag management function network element, an access and mobility management network element that has a passive internet of things interaction capability and covers the first area;
sending, by the tag management function network element, a fourth request message to the access and mobility management network element, wherein the fourth request message is used to request the list of terminal devices in the first area that have the capability of exciting a passive internet of things tag; and
receiving, by the tag management function network element, fifth information from the access and mobility management network element, wherein the fifth information comprises the list of terminal devices in the first area that have the capability of exciting a passive internet of things tag.

10. The method according to claim 7 or 8, wherein determining, by the tag management function network element, the list of terminal devices in the first area that have the capability of exciting a passive internet of things tag comprises:
selecting, by the tag management function network element, an access and mobility management network element that has a passive internet of things interaction capability and covers the first area;
sending, by the tag management function network element, a fifth request message to the access and mobility management network element, wherein the fifth request message is used to request a list of terminal devices in the first area;
receiving, by the tag management function network element, sixth information from the access and mobility management network element, wherein the sixth information comprises the list of terminal devices in the first area;
sending, by the tag management function network element, a sixth request message to a unified data management network element, wherein the sixth request message comprises the list of terminal devices in the first area, and the sixth request message is used to request passive internet of things capability information of the terminal device in the first area;
receiving, by the tag management function network element, seventh information from the unified data management network element, wherein the seventh information comprises the passive internet of things capability information of the terminal device in the first area; and
determining, by the tag management function network element based on the seventh information, the list of terminal devices in the first area that have the capability of exciting a passive internet of things tag.

11. A communication apparatus, wherein the apparatus comprises a module or unit configured to implement the method according to any one of claims 1 to 6, or the apparatus comprises a module or unit configured to implement the method according to any one of claims 7 to 10.

12. A communication apparatus, comprising a memory and a processor, wherein
the memory is configured to store instructions or a computer program; and
the processor is configured to execute the computer program or the instructions stored in the memory, to cause the communication apparatus to perform the method according to any one of claims 1 to 6, or cause the communication apparatus to perform the method according to any one of claims 7 to 10.

13. A computer-readable storage medium, wherein the computer-readable storage medium stores a computer program, and when the computer program is run, the method according to any one of claims 1 to 6 is implemented, or the method according to any one of claims 7 to 10 is implemented.

14. A computer program product, wherein the computer program product comprises computer program code, and when the computer program code is run, the method according to any one of claims 1 to 6 is implemented, or the method according to any one of claims 7 to 10 is implemented.
